# EUROPEAN PATENT APPLICATION

(11) **EP 2 983 398 A1**
(43) Date of publication of application: **10.02.2016**
(21) Application number: 14778232.0
(22) Date of filing: 01.04.2014
(51) Int. Cl.: H04W 24/10, H04W 16/32, H04W 72/04

(54) **RADIO COMMUNICATION SYSTEM, BASE STATION DEVICE, TERMINAL DEVICE, RADIO COMMUNICATION METHOD, AND INTEGRATED CIRCUIT**

(30) Priority: 02.04.2013 JP 2013076579
(71) Applicant: Sharp Kabushiki Kaisha, Osaka-shi, Osaka 545-8522 (JP)
(72) Inventor: KATO Yasuyuki, Osaka-shi, Osaka 545-8522 (JP); UEMURA Katsunari, Osaka-shi, Osaka 545-8522 (JP); TSUBOI Hidekazu, Osaka-shi, Osaka 545-8522 (JP)
(74) Representative: Müller-Boré & Partner Patentanwälte PartG mbB
(86) International application number: PCT/JP2014/059650
(87) International publication number: WO 2014/163082

(57) **Abstract**

There is provided a radio communication system in which a first base station device and a second base station device communicate with a terminal device. The terminal device transmits report information corresponding to data transmission of each of the base station devices, to the first base station device and the second base station device. The terminal device transmits report information corresponding to data transmission of the second base station device to the first base station device in a case where occurrence of a problem is detected in a radio link between the second base station device and the terminal device. The first base station device detects occurrence of a problem in the radio link between the second base station device and the terminal device in a case where the report information corresponding to the second base station device is received from the terminal device.

## Description

### Technical Field

The present invention relates to a radio communication system, a base station device, and a terminal device, more particularly, to the radio communication system, the base station device, the terminal device, a radio communication method, and an integrated circuit which relate to transmission and reception control of data.

The present application claims priority to Japanese Patent Application No. 2013-076579 filed in Japan on April 2, 2013, the contents of which are incorporated herein by reference.

### Background Art

In 3GPP (3rd Generation Partnership Project), a W-CDMA technology has been standardized as a third generation cellular mobile communication scheme and a service has been provided. In addition, HSDPA having a further increased communication speed has also been standardized, and a service has been provided.

In 3GPP, evolution of the third generation radio access (Evolved Universal Terrestrial Radio Access, below referred to as "EUTRA") has been standardized and provision of a service has been started. As a communication scheme of a downlink in EUTRA, an OFDM (orthogonal frequency division multiplexing) scheme which is resistant to multi-path interference and is suitable for high-speed transmission has been employed. As a communication scheme of an uplink, a DFT discrete Fourier transform)-spread OFDM scheme of SC-FDMA (single carrier-frequency division multiple access) which can reduce a PAPR (peak to average power ratio) of a transmitted signal has been employed in consideration of consumed power and cost in a mobile station device.

Further, in 3GPP, a discussion of Advanced-EUTRA which is a further evolution of EUTRA has also been started. In Advanced-EUTRA, it is assumed that a frequency band up to the maximum 100 MHz bandwidth is used in an uplink and in a downlink, and a communication with the maximum transmission rate which is equal to or greater than 1 Gbps in the downlink and is equal to or greater than 500 Mbps in the uplink is performed.

In the Advanced-EUTRA, it is considered that a frequency band of the maximum 100 MHz is realized by bundling a plurality of frequency bands which are compatible with EUTRA such that a mobile station device for EUTRA can be also handled. In the Advanced-EUTRA, one frequency band of equal to or less than 20 MHz in EUTRA is also referred to as a component carrier (CC). The component carrier is also referred to as a cell. Bundling frequency bands of equal to or less than 20 MHz is referred to as carrier aggregation (CA) (NPL 1).

In the Advanced-EUTRA, performing of carrier aggregation of a macro cell and a small cell which is in a range of the macro cell is examined. Being in a range of the macro cell includes a case of different frequencies. In NPL 2, it is proposed that control information (control plane information) is transmitted from a macro cell and user information (user plane information) is transmitted from a small cell in a communication between a base station device and a mobile station device during carrier aggregation of the macro cell and the small cell. Carrier aggregation of the macro cell and the small cell disclosed in NPL 2 is also referred to as dual connect.

### Citation List

### Non Patent Literature

NPL 1: 3GPP TS (Technical Specification) 36.300, V10.8.0(2012-06), Evolved Universal Terrestrial Radio Access (E-UTRA) and Evolved Universal Terrestrial Radio Access Network (E-UTRAN), Overall description Stage2
NPL 2: RWS-120010, NTT DOCOMO, "Requirements, Candidate Solutions & Technology Roadmap for LTE Rel-12 Onward", 3GPP Workshop on Release 12 and onward, Ljubljana, Slovenia, 11-12 June, 2012

### Summary of Invention

### Technical Problem

However, in the communication between a base station device and a mobile station device as disclosed in NPL 2, the base station device is required to allocate radio resources to the mobile station device with high efficiency in order to transmit and receive control information between the base station device and the mobile station device of a macro cell and to transmit and receive user information between the base station device and the mobile station device of a small cell. The mobile station device is required to appropriately request the base station device of allocation of the radio resources.

Considering such circumstances, an object of an aspect of the present invention is to provide a mobile station device, a base station device, a radio communication system, a radio communication method, and an integrated circuit that enable a mobile station device to appropriately transmit control information and user information to a base station device of a macro cell and a base station device of a small cell.

### Solution to Problem

(1) In order to achieve the above-described object, an aspect of the present invention provides the following means. A radio communication system according to an aspect of the invention is a radio communication system in which a first base station device and a second base station device communicate with a terminal device, in which the terminal device transmits, to the first base station device and the second base station device, report information corresponding to data transmission of each of the base station devices, and the terminal device transmits, to the first base station device, report information corresponding to data transmission of the second base station device, in a case where occurrence of a problem is detected in a radio link between the second base station device and the terminal device.
(2) In the radio communication system according to the aspect of the present invention, the terminal device may determine that occurrence of a problem in the radio link of the second base station device is detected, in a case where a response to a scheduling request is not obtained from the second base station device even though the scheduling request is transmitted to the second base station device a predetermined number of times.
(3) In the radio communication system according to the aspect of the present invention, the report information may be a buffer status report of uplink data.
(4) In the radio communication system according to the first aspect of the present invention, the report information may be downlink radio channel quality information.
(5) In the radio communication system according to the aspect of the present invention, the first base station device may notify the second base station device of a connection release request, in a case where the report information corresponding to the second base station device is received from the terminal device.
(6) A base station device according to an aspect of the invention is a base station device that is connected to other base station device and communicates with a terminal device, in which the base station device receives, from the terminal device, report information corresponding to data transmission of its own base station device, and the base station device detects occurrence of a problem in a radio link between the other base station device and the terminal device, in a case where report information corresponding to data transmission of the other base station device is received from the terminal device.
(7) The base station device according to the aspect of the present invention may notify the other base station device of a connection release request, in a case where occurrence of the problem in the radio link between the other base station device and the terminal device is detected.
(8) A terminal device according to an aspect of the invention is a terminal device that communicates with a first base station device and a second base station device, in which the terminal device transmits, to the first base station device and the second base station device, report information corresponding to data transmission of each of the base station devices, and the terminal device transmits, to the first base station device, the report information corresponding to data transmission of the second base station device, in a case where occurrence of a problem in a radio link between the second base station device and the terminal device is detected.
(9) The terminal device according to the aspect of the present invention may determine that occurrence of the problem in the radio link of the second base station device is detected, in a case where a response to a scheduling request is not obtained from the second base station device even though the scheduling request is transmitted to the second base station device a predetermined number of times.
(10) A radio communication method of a base station device according to an aspect of the invention is a radio communication method of a base station device that is connected to other base station device and communicates with a terminal device, the method including: a step of receiving, from the terminal device, report information corresponding to data transmission of its own base station device; a step of detecting occurrence of a problem in a radio link between the other base station device and the terminal device, in a case where report information corresponding to data transmission of the other base station device is received from the terminal device; and a step of notifying the other base station device of a connection release request, in a case where occurrence of the problem in the radio link between the other base station device and the terminal device is detected.
(11) A radio communication method of a terminal device according to another aspect of the invention is a radio communication method of a terminal device that communicates with a first base station device and a second base station device, the method including: a step of transmitting, to the first base station device and the second base station device, report information corresponding to data transmission of each of the base station devices; and a step of transmitting, to the first base station device, the report information corresponding to data transmission of the second base station device, in a case where occurrence of a problem in a radio link between the second base station device and the terminal device is detected.
(12) An integrated circuit according to an aspect of the invention is an integrated circuit that is applied to a base station device that is connected to other base station device and communicates with a terminal device, the circuit including: means for receiving, from the terminal device, report information corresponding to data transmission of its own base station device; means for detecting occurrence of a problem in a radio link between the other base station device and the terminal device, in a case where report information corresponding to data transmission of the other base station device is received from the terminal device; and means for notifying the other base station device of a connection release request in a case where occurrence of the problem in the radio link between the other base station device and the terminal device is detected.
(13) An integrated circuit according to another aspect of the invention is an integrated circuit that is applied to a terminal device which communicates with a first base station device and a second base station device, the circuit including: means for transmitting, to the first base station device and the second base station device, report information corresponding to data transmission of each of the base station devices; and means for transmitting, to the first base station device, the report information corresponding to data transmission of the second base station device, in a case where occurrence of a problem in a radio link between the second base station device and the terminal device is detected.

### Advantageous Effects of Invention

According to an aspect of the present invention, it is possible to perform data transmission and reception between the base station device of the macro cell and the mobile station device or between the base station device of the small cell and the mobile station device with high efficiency.

### Brief Description of Drawings

[Fig. 1] Fig. 1 is a diagram illustrating an example of a structure of a mobile station device according to an embodiment of the present invention.
[Fig. 2] Fig. 2 is a diagram illustrating an example of a structure of a base station device according to the embodiment of the present invention.
[Fig. 3] Fig. 3 is a diagram illustrating an example of scheduling request transmission processing.
[Fig. 4] Fig. 4 is a diagram illustrating an example of a dual connect release procedure.
[Fig. 5] Fig. 5 is a diagram illustrating an example of a dual connect release procedure.
[Fig. 6] Fig. 6 is a diagram illustrating an example of a physical channel structure in EUTRA.
[Fig. 7] Fig. 7 is a diagram illustrating an example of a channel structure of a downlink in EUTRA.
[Fig. 8] Fig. 8 is a diagram illustrating an example of a channel structure of an uplink in EUTRA.
[Fig. 9] Fig. 9 is a diagram illustrating an example of a structure of a communication protocol relating to control information of the base station device and the mobile station device.
[Fig. 10] Fig. 10 is a diagram illustrating an example of a structure of a communication protocol relating to user information of the base station device and the mobile station device.
[Fig. 11] Fig. 11 is a diagram illustrating an example of a contention based random access procedure.
[Fig. 12] Fig. 12 is a diagram illustrating an example of a non-contention based random access procedure.
[Fig. 13] Fig. 13 is a diagram illustrating an example of a handover procedure.
[Fig. 14] Fig. 14 is a diagram illustrating an example of dual connect.

### Description of Embodiments

An OFDM scheme is employed for a downlink of EUTRA. A single carrier communication method of a DFT-spread OFDM scheme is employed for an uplink of EUTRA.

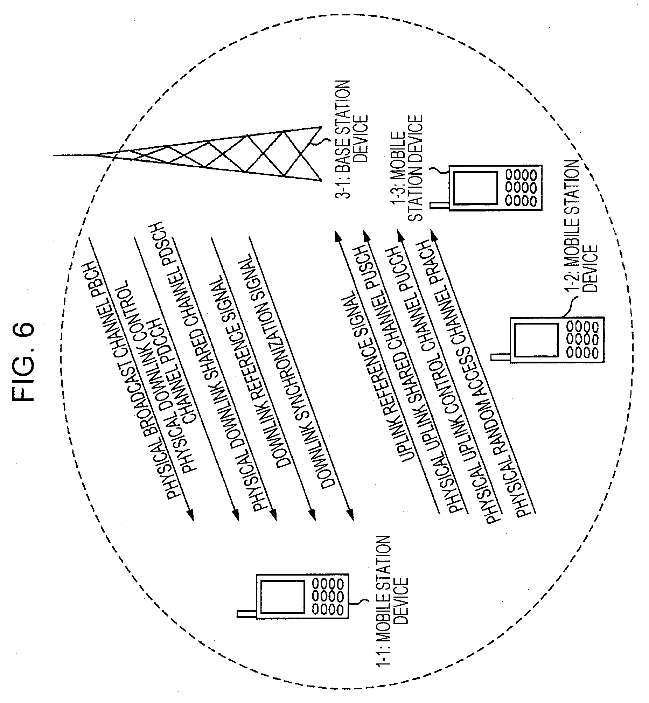

Fig. 6 is a diagram illustrating a physical channel structure of EUTRA. A physical downlink shared channel PDSCH, a physical downlink control channel PDCCH, and a physical broadcast channel PBCH constitute a physical channel of a downlink. In addition, there are physical signals of a downlink synchronization signal and a downlink reference signal (NPL 1).

A physical random access channel PRACH, a physical uplink shared channel PUSCH, and a physical uplink control channel PUCCH constitute a physical channel of an uplink. In addition, there is a physical signal of an uplink reference signal (NPL 1).

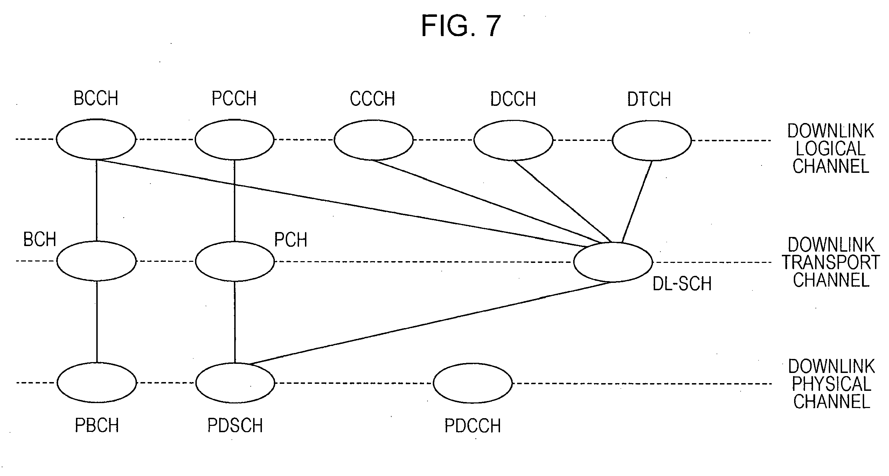

Fig. 7 is a diagram illustrating a channel structure of a downlink of EUTRA. The channels of the downlink illustrated in Fig. 7 are respectively constituted by a logical channel, a transport channel, and a physical channel. The logical channel defines a type of data transmission service which is transmitted and received in a medium access control (MAC) layer. The transport channel defines characteristics of data transmitted in a radio interface and how the data is transmitted. The physical channel is a channel which carries data transmitted to a physical layer on the transport channel, and is physical.

The logical channel of the downlink includes a broadcast control channel BCCH, a paging control channel PCCH, a common control channel CCCH, a dedicated control channel DCCH, and a dedicated traffic channel DTCH.

The transport channel of the downlink includes a broadcast channel BCH, a paging channel PCH, and a downlink shared channel DL-SCH.

The physical channel of the downlink includes a physical broadcast channel PBCH, a physical downlink control channel PDCCH, and a physical downlink shared channel PDSCH. These channels are transmitted and received between a base station device and a mobile station device.

Next, the logical channel will be described. The broadcast control channel BCCH is a downlink channel used for broadcasting system control information. The paging control channel PCCH is a downlink channel which is used for transmitting paging information, and is used when a network does not know a location of a cell of the mobile station device. The common control channel CCCH is a channel used for transmitting control information between a mobile station device and the network and is used by a mobile station device which does not have a radio resource control (RRC) connection with the network.

The dedicated control channel DCCH is a one-to-one (point-to-point) bidirectional channel and is a channel used for transmitting individual control information between a mobile station device and the network. The dedicated control channel DCCH is used by a mobile station device having RRC connection. The dedicated traffic channel DTCH is a point-to-point bidirectional channel and is a dedicated channel for one mobile station device. The dedicated traffic channel DTCH is used for transmitting user information (unicast data).

Next, the transport channel will be described. The broadcast channel BCH is broadcast to the entirety of a cell by using a transmission format which is fixed and defined in advance. A HARQ (hybrid automatic repeat request), dynamic adaptive radio link control, discontinuous reception (DRX) are supported in the downlink shared channel DL-SCH, and the downlink shared channel DL-SCH is required to be broadcast to the entirety of a cell.

DRX is supported in the paging channel PCH, and the paging channel PCH is required to be broadcast to the entirety of a cell. The paging channel PCH is mapped onto physical resources which are dynamically used for the traffic channel or other control channels, that is, onto the physical downlink shared channel PDSCH.

Next, the physical channel will be described. The physical broadcast channel PBCH is mapped onto the broadcast channel BCH at a period of 40 milliseconds. The physical downlink control channel PDCCH is a channel which performs resource allocation for the downlink shared channel PDSCH and notifies a mobile station device of hybrid automatic repeat request (HARQ) information for downlink data, and an uplink transmission grant (uplink grant) which corresponds to resource allocation of the physical uplink shared channel PUSCH. The physical downlink shared channel PDSCH is a channel used for transmitting the downlink data or the paging information.

Next, channel mapping will be described. As illustrated in Fig. 7, mapping of the transport channel and the physical channel is performed in the downlink as follows. The broadcast channel BCH is mapped onto the physical broadcast channel PBCH. The paging channel PCH and the downlink shared channel DL-SCH are mapped onto the physical downlink shared channel PDSCH. The physical downlink control channel PDCCH is used only for the physical channel.

Mapping of the logical channel and the transport channel is performed in the downlink as follows. The paging control channel PCCH is mapped onto the paging channel PCH. The broadcast control channel BCCH is mapped onto the broadcast channel BCH and the downlink shared channel DL-SCH. The common control channel CCCH, the dedicated control channel DCCH, and the dedicated traffic channel DTCH are mapped onto the downlink shared channel DL-SCH.

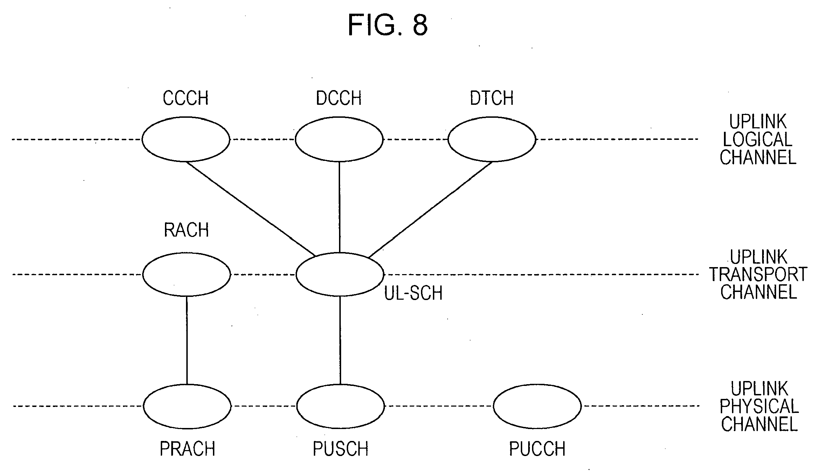

Fig. 8 is a diagram illustrating a channel structure of the uplink in EUTRA. Each of channels of the uplink illustrated in Fig. 8 is constituted by a logical channel, a transport channel, and a physical channel. The definition of each channel is the same as that of the channel of the downlink.

The logical channel of the uplink includes a common control channel CCCH, a dedicated control channel DCCH, and a dedicated traffic channel DTCH.

The transport channel of the uplink includes an uplink shared channel UL-SCH and a random access channel RACH.

The physical channel of the uplink includes a physical uplink control channel PUCCH, a physical uplink shared channel PUSCH, and a physical random access channel PRACH. These channels are transmitted and received between a base station device and a mobile station device. The physical random access channel PRACH is used mainly in random access preamble transmission which is performed for acquiring transmission timing information, from a mobile station device to a base station device. The random access preamble transmission is performed in a random access procedure.

Next, the logical channel will be described. The common control channel CCCH is a channel used for transmitting control information between a mobile station device and a network. The common control channel CCCH is used by a mobile station device which does not have a radio resource control (RRC) connection with the network.

The dedicated control channel DCCH is a one-to-one (point-to-point) bidirectional channel and is a channel used for transmitting individual control information between a mobile station device and the network. The dedicated control channel DCCH is used by a mobile station device having an RRC connection. The dedicated traffic channel DTCH is a point-to-point bidirectional channel and is a dedicated channel for one mobile station device. The dedicated traffic channel DTCH is used for transmitting user information (unicast data).

Next, the transport channel will be described. A HARQ (hybrid automatic repeat request), dynamic adaptive radio link control, and discontinuous transmission (DTX) are supported in the uplink shared channel UL-SCH. Limited control information is transmitted in the random access channel RACH.

Next, the physical channel will be described. The physical uplink control channel PUCCH is a channel used for notifying a base station device of response information (ACK/NACK) for downlink data, of radio quality information of the downlink, and a request (Scheduling Request: SR) for transmission of uplink data. The physical uplink shared channel PUSCH is a channel used for transmitting the uplink data. The physical random access channel is a channel used for transmitting a random access preamble.

Next, channel mapping will be described. As illustrated in Fig. 8, mapping of the transport channel and the physical channel is performed in the uplink. The uplink shared channel UL-SCH is mapped onto the physical uplink shared channel PUSCH. The random access channel RACH is mapped onto the physical random access channel PRACH. The physical uplink control channel PUCCH is a physical channel having no mapped transport channel.

Mapping of the logical channel and the transport channel is performed in the uplink as follows. The common control channel CCCH, the dedicated control channel DCCH, and the dedicated traffic channel DTCH are mapped onto the uplink shared channel UL-SCH.

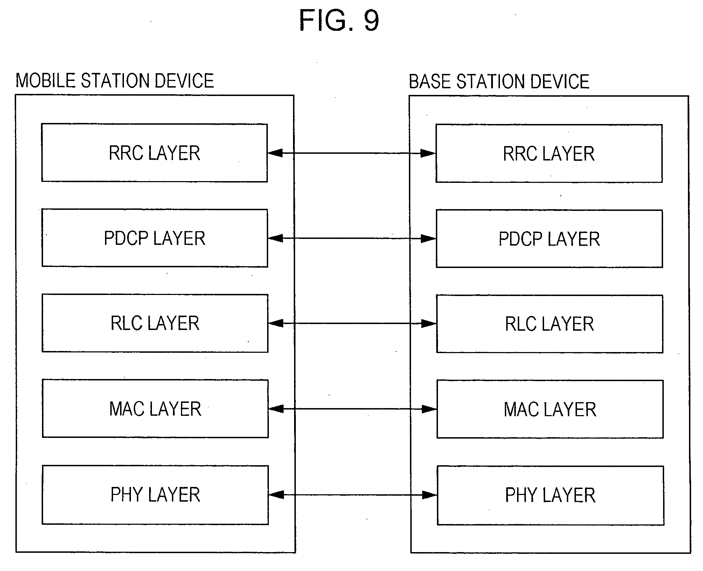

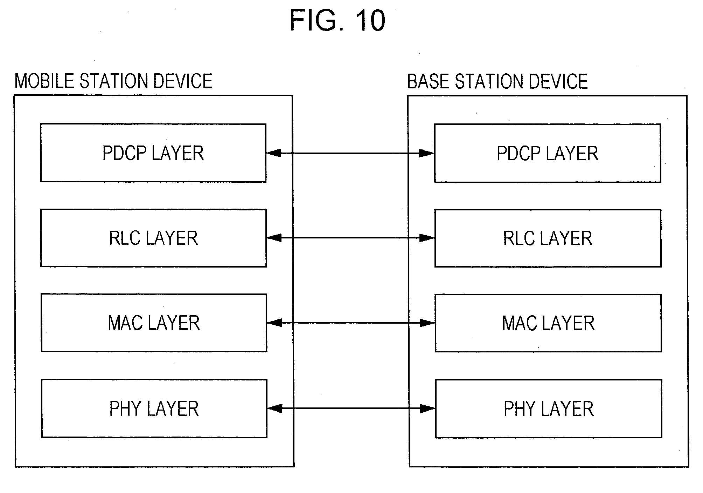

Fig. 9 illustrates a protocol stack for handling control data of a mobile station device and a base station device in EUTRA. Fig. 10 illustrates a protocol stack for handling user data of a mobile station device and a base station device in EUTRA. Descriptions regarding Figs. 9 and 10 will be made below.

A physical layer (PHY layer) uses the physical channel and provides a higher layer to a transmission service. The PHY layer is connected to a higher medium access control layer (MAC layer) by using the transport channel. Data moves between the MAC layer and the PHY layer through the transport channel. Data is transmitted and received between a PHY layer of the mobile station device and a PHY layer of the base station device through the physical channel.

The MAC layer maps various logical channels onto various transport channels. The MAC layer is connected to a higher radio link control layer (RLC layer) by using the logical channel. The logical channel is classified much in accordance with a type of transmitted information, and is classified into the control channel which transmits the control information and the traffic channel which transmits the user information. The MAC layer has a function to control the PHY layer for performing discontinuous reception and transmission (DPX·DTX), a function to perform the random access procedure, a function to perform notification of information on transmission power, and a function to control HARQ, and the like.

The RLC layer performs segmentation and concatenation on data received from the higher layer and adjusts data size so as to allow a lower layer to appropriately transmit data. The RLC layer has a function to guarantee QoS (quality of service) required for data. That is, the RLC layer has a function of retransmission control and the like of data.

A packet data convergence protocol layer (PDCP layer) has a function of header compression in which unnecessary control information is compressed in order to efficiently transmit an IP packet which is the user data for radio section. The PDCP layer has a function to encrypt data.

The radio resource control layer (RRC layer) is defined only by the control information. The RRC layer configures and reconfigures a radio bearer (RB) and controls the logical channel, the transport channel, and the physical channel. The RB is classified into a signaling radio bearer (SRB) and a data radio bearer (DRB). The SRB is used as a path for transmitting an RRC message which is the control information. The DRB is used as a path for transmitting the user information. The RB is configured between the RRC layer of a base station device and the RRC layer of the mobile station device.

The PHY layer corresponds to a physical layer which is a first layer in the hierarchical structure of the open systems interconnection (OSI) model which is generally known. The MAC layer, the RLC layer, and the PDCP layer correspond to a data link layer which is a second layer in the OSI model. The RRC layer corresponds to a network layer which is a third layer in the OSI model.

The random access procedure will be described below. The random access procedure includes two access procedures which are a contention based random access procedure and a non-contention based random access procedure (NPL 1).

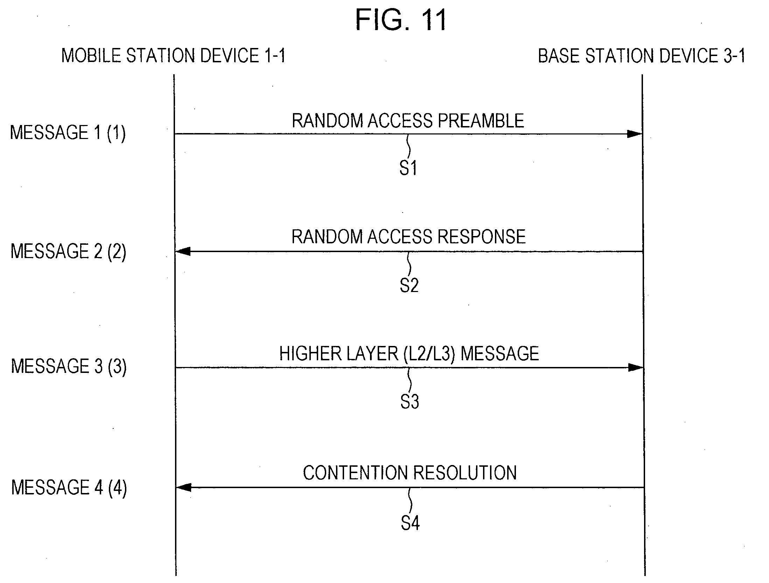

Fig. 11 is a diagram illustrating processes of the contention based random access procedure. The contention based random access procedure is a random access procedure having a probability of a collision between mobile station devices and is performed at a time of an initial access in a state where a connection (communication) with a base station device is not performed, or at a time of a scheduling request and the like when uplink data is transmitted to a mobile station device when the mobile station device is connected to the base station device, but in a state where uplink synchronization is lost.

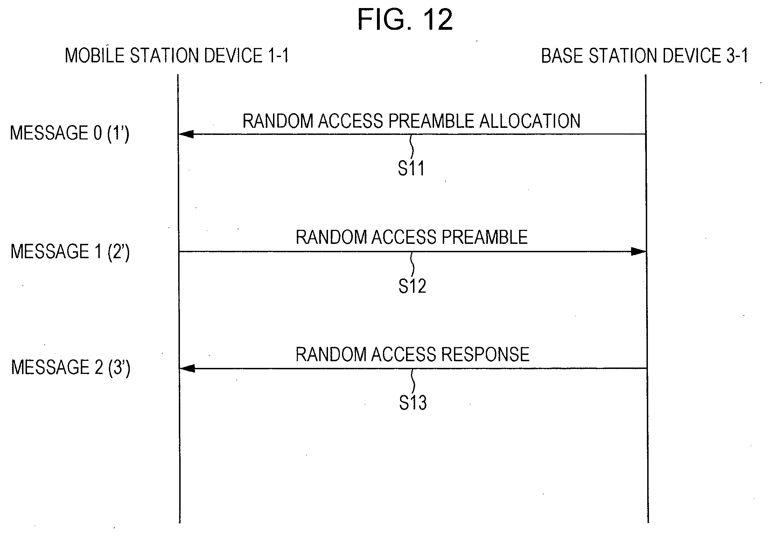

Fig. 12 is a diagram illustrating the non-contention based random access procedure. The non-contention based random access procedure is a random access procedure in which a collision between mobile station devices does not occur. A mobile station device starts this random access procedure in accordance with an instruction from a base station device in a special case, for example, in a case of handover, or in a case where a transmission timing of the mobile station device is not efficient, such that uplink synchronization between the mobile station device and the base station device is rapidly performed in a case where uplink synchronization is lost in a connection of the base station device and the mobile station device. The non-contention based random access procedure is instructed by a message of the RRC (Radio Resource Control: Layer 3) and control data of the physical downlink control channel PDCCH.

The contention based random access procedure will be simply described using Fig. 11. At first, a mobile station device 1-1 transmits a random access preamble to a base station device 3-1 (Message 1: (1), Step S1). The base station device 3-1 which has received the random access preamble transmits a response (random access response) to the random access preamble to the mobile station device 1-1 (Message 2: (2), Step S2). The mobile station device 1-1 transmits a message of a higher layer (Layer 2/Layer 3) based on scheduling information included in the random access response (Message 3: (3), Step S3). The base station device 3-1 transmits a collision check message to the mobile station device 1-1 which was able to receive the higher layer message of (3) (Message 4: (4), Step S4). The contention based random access is also referred to as transmission of a random preamble.

The non-contention based random access procedure will be simply described using Fig. 12. At first, the base station device 3-1 notifies the mobile station device 1-1 of a preamble number (or sequence number) and a random access channel number which is to be used (Message 0: (1)', Step S11). The mobile station device 1-1 transmits a random access preamble of a preamble number which is set to the random access channel RACH which is set (Message 1: (2)', Step S12). The base station device 3-1 which has received the random access preamble transmits a response (random access response) to the random access preamble to the mobile station device 1-1 (Message 2: (3)', Step S13). However, the contention based random access procedure is performed in a case where a value of the notified preamble number is 0. The non-contention based random access procedure is also referred to as dedicated preamble transmission.

In a case where the random access response is not received or a collision confirmation message is not received after transmission of the random access preamble, the random access preamble is retransmitted. In a case where a response is not received from the base station device 3-1 and the random access procedure is not ended even though transmission of the random access preamble is repeated, the MAC layer of the mobile station device 1-1 detects a random access problem (RAP) and notifies the RRC layer of the mobile station device 1-1 of the random access problem. The RRC layer of the mobile station device 1-1 determines occurrence of a radio link failure (RLF) and performs reconnection processing in a case where notification of the random access problem is received from the MAC layer.

The physical uplink control channel PUCCH is used in transmitting of a response (ACK/NACK) to downlink data transmitted by the physical downlink shared channel PUSCH, a radio channel quality indicator (CQI) of the downlink, and a transmission request (scheduling request) of uplink data. In a case where the mobile station device 1-1 requests transmission of the uplink data, the mobile station device 1-1 transmits the scheduling request to the base station device 3-1 by using the physical uplink control channel PUCCH which is allocated by the base station device 3-1.

In a case where the physical uplink shared channel PUSCH is allocated by the base station device 3-1 after transmission of the scheduling request, the mobile station device 1-1 transmits a buffer status report (BSR) indicating a buffer status of transmission data of the mobile station device 1-1 on the allocated physical uplink shared channel PUSCH. The base station device 3-1 performs uplink data scheduling for the mobile station device 1-1 based on the buffer status report.

In a case where the physical uplink shared channel PUSCH is not allocated by the base station device 3-1 after transmission of the scheduling request, the mobile station device 1-1 transmits the scheduling request again. In a case where the physical uplink shared channel PUSCH is not allocated by the base station device 3-1 even though retransmission of the scheduling request is repeated, the mobile station device 1-1 releases the allocated physical uplink control channel PUCCH and the uplink reference signal and performs the random access procedure for the scheduling request. The mobile station device 1-1 transmits Message 3 and thereby transmits the buffer status report by using the scheduling request by the random access procedure.

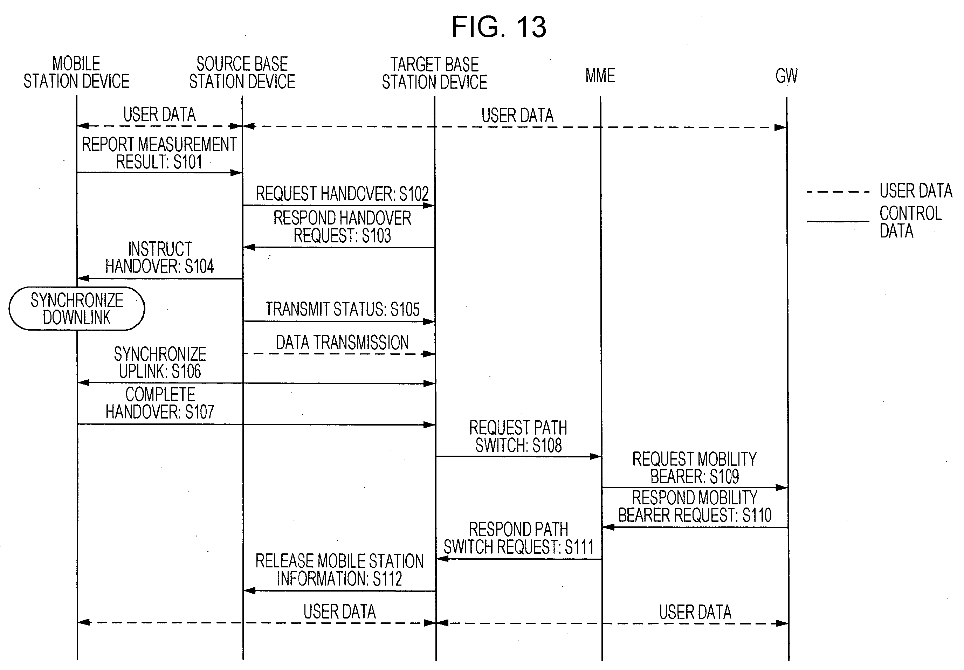

Next, a handover procedure will be described using Fig. 13. A base station device which corresponds to a handover source is described below as a source base station device, and a base station device which corresponds to a handover destination is described below as a target base station device. The mobile station device measures radio quality of peripheral cells of a serving frequency and a peripheral frequency and notifies the source base station device of a measurement report message including a radio quality measurement result (Step S101). The source base station device determines whether or not the handover is to be performed based on a measurement result from the mobile station device. The source base station device determines a target base station device corresponding to the handover destination, and notifies the target base station device corresponding to the handover destination, of a handover request message in a case where the handover is to be performed (Step S102).

The handover request message includes information necessary for the handover in the target base station device. The information necessary for the handover includes information (UE Context) of the mobile station device which includes C-RNTI of an RRC layer level in the source base station device, information of the mobile station device, which is in a higher layer level than the RRC layer, encryption key information, a MAC address of the mobile station device, and the like.

If the target base station device which corresponds to the handover destination consent to the handover, the target base station device notifies the source base station device which corresponds to the handover source of a handover request response message (Step S103). The handover request response message includes radio parameters of a cell of the target base station device, and information which is allocated to the mobile station device by the target base station device. The allocated information includes radio resource information of the uplink, preamble information for performing the random access procedure at a time of the handover, new C-RNTI for the mobile station device which is used in the cell of the target base station device, information regarding an encryption key, and the like.

If the source base station device receives the handover request response message, the source base station device notifies the mobile station device to a handover instruction message (Step S104). The handover instruction message includes radio parameters of the cell of the base station device which are included in the hand handover request response message and are used in the cell of the target base station device, information which is allocated to the mobile station device by the target base station device, and the like.

After notification of the handover instruction message, the source base station device notifies the target base station device of a status transmission message including user data information of the mobile station device (Step S105). User data of the mobile station device held by the source base station device is transmitted to the target base station device. If the mobile station device receives the handover instruction message, the mobile station device performs downlink synchronization with the target base station device. If the mobile station device completes the downlink synchronization, the mobile station device performs the random access procedure in order to have synchronization of the uplink with the target base station device (Step S106). If the mobile station device receives the random access response message from the target base station device and acquires a uplink transmission timing for uplink synchronization, the mobile station device notifies the target base station device of a handover completion message (Step S107).

If the target base station device receives the handover completion message, the target base station device notifies an MME (mobility management entity) of a path switch request message, and thus requests a change of a data path (data transmission path) by changing the base station device to which the mobile station device is connected, from the source base station device to the target base station device (Step S108). If the MME receives the path switch request message, the MME notifies a gateway (GW) of a mobility bearer request message (Step S109).

If the GW receives the mobility bearer request message, the GW switches the data path of the mobile station device for user data from the source base station device to the target base station device. The GW notifies the MME of a mobility bearer request response message (Step S110). The MME notifies the target base station device of a path switch request response message (Step S111). If the target base station device receives the path switch request response message, the target base station device notifies the source base station device of a mobile station information release message for instructing release of information on the mobile station device (Step S112). If the source base station device receives the mobile station information release message, the source base station device deletes information on the mobile station device which is subjected to handover with the target base station device.

In 3GPP, a discussion of Advanced-EUTRA which corresponds to more evolution of EUTRA has also been performed. In Advanced-EUTRA, it is assumed that a frequency band up to the maximum 100 MHz bandwidth is used in an uplink and in a downlink, and a communication having the maximum transmission rate which is equal to or greater than 1 Gbps in the downlink and is equal to or greater than 500 Mbps in the uplink is performed.

In Advanced-EUTRA, it is considered that a frequency band of the maximum 100 MHz is realized by bundling a plurality of frequency bands which are equal to or less than 20 MHz in EUTRA such that a mobile station device for EUTRA can be also handled. In Advanced-EUTRA, one frequency band of equal to or less than 20 MHz in EURTA is also referred to as a component carrier (CC) (NPL 1). Combination of one downlink component carrier and one uplink component carrier constitutes one cell. Only one downlink component carrier may constitute one cell.

The base station device allocates a plurality of cells relating to communication performance or communication conditions of the mobile station device, and communicates with the mobile station device through the allocated plurality of cells. The plurality of cells which are allocated to the mobile station device is classified such that one cell is set as a primary cell (PCell) and other cells are set as secondary cells (SCell). A special function such as allocation of the physical uplink control channel PUCCH is set in the primary cell.

In order to reduce consumed power of the mobile station device, the mobile station device does not perform reception processing of the downlink on the secondary cells just after allocation (or does not perform reception processing in accordance with radio resource allocation information instructed through the physical downlink control channel PDCCH). After activation is instructed from the base station device, the mobile station device starts to perform reception processing of the downlink on the secondary cell which receives an instruction of activation (or perform reception processing in accordance with the radio resource allocation information instructed through the physical downlink control channel PDCCH).

After deactivation is instructed to the activated secondary cell from the base station device, the mobile station device stops performing the reception processing of the downlink on the secondary cell which receives an instruction of deactivation (or performing the reception processing in non-accordance with the radio resource allocation information instructed through the physical downlink control channel PDCCH). The secondary cell that receives an instruction of activation from the base station device and performs reception processing of the downlink is referred to as an activated cell. The secondary cell just after allocation to the mobile station device by the base station device, and the secondary cell which receives an instruction of deactivation from the base station device and stops the reception processing of the downlink are referred to as a deactivated cell. The primary cell normally corresponds to the activated cell.

The MAC layer of the mobile station device has a function to control the PHY layer so as to perform activation/deactivation of the cell and a function to control the PHY layer so as to manage a transmission timing of the uplink, in a case where carrier aggregation is performed.

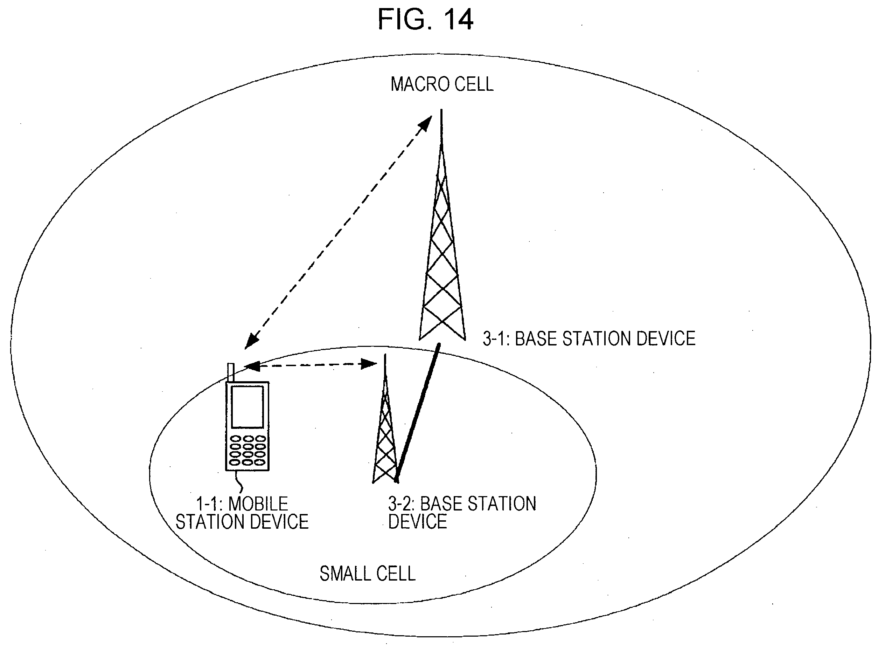

It is examined as illustrated in Fig. 14 that the mobile station device communicates with both two base station devices simultaneously with performing of dual connect with the two base station devices. In the dual connect, it is assumed that the mobile station device connects a base station device of a macro cell with a base station device of a small cell, and the mobile station device and both of the base station devices perform data transmission and reception through the a plurality of cells when a connection between the base station device of the macro cell and the base station device of the small cell is performed by using a low speed backbone line which has a delay, not a high speed backbone line (also referred to as backhaul) such as an optical fiber, which is considered to have no delay.

In the dual connect, it is desired that the macro cell is set as the primary cell (PCell), the small cell is set as the secondary cell (SCell), and communications is performed between the mobile station device and each of the base station devices. However, no relationship between the base station devices (the macro cell and the small cell) having different types of cells may be set. In the dual connect, it is assumed that transmission and reception of control data (control information) is performed between the base station device and the mobile station device of the macro cell, and transmission and reception of user data (user information) is performed between the base station device and the mobile station device of the small cell. Additionally, it is considered that the base station device that is to perform transmission and reception of data is changed based on types of data (for example, QoS, logical channel, or the like) more detail than types of the control data and the user data. It is also considered that activation/deactivation is performed similarly to carrier aggregation.

### (Embodiment)

### [Description of Structure]

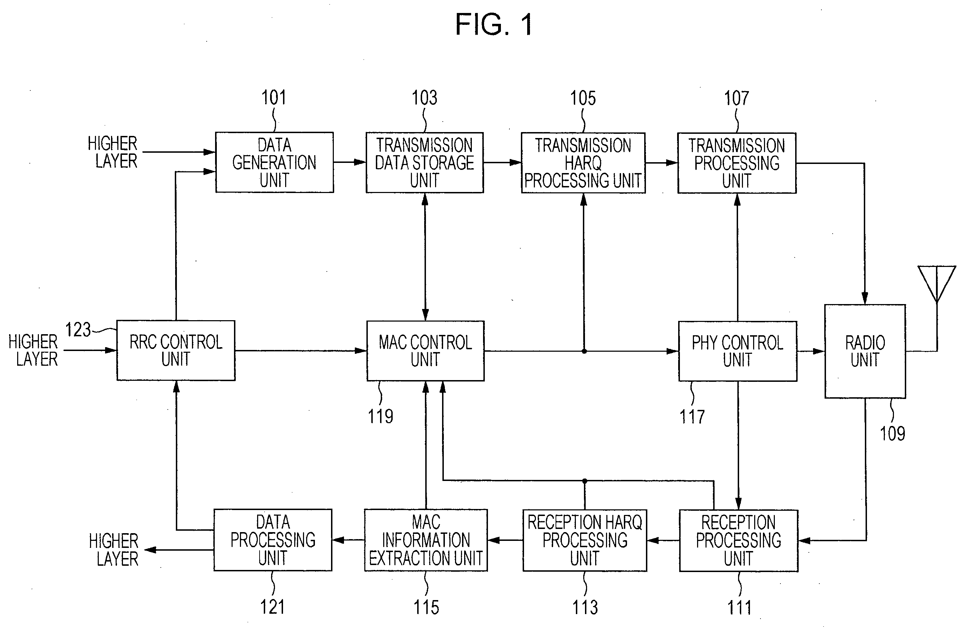

Fig. 1 is a diagram illustrating a structure of the mobile station device according to an embodiment of the present invention. A data generation unit 101, a transmission data storage unit 103, a transmission HARQ processing unit 105, a transmission processing unit 107, a radio unit 109, a reception processing unit 111, a reception HARQ processing unit 113, an MAC information extraction unit 115, a PHY control unit 117, an MAC control unit 119, a data processing unit 121, and an RRC control unit 123 constitute each of mobile station devices 1-1 to 1-3.

User data from a higher layer and control data from the RRC control unit 123 are input to the data generation unit 101. The data generation unit 101 has functions as the PDCP layer and the RLC layer. The data generation unit 101 performs processing such as header compression of an IP packet of the user data, encryption of data, and segmentation and association of data. The data generation unit 101 adjusts a data size. The data generation unit 101 outputs data subjected to processing to the transmission data storage unit 103.

The transmission data storage unit 103 accumulates pieces of data input from the data generation unit 101, and output data which is instructed based on an instruction from the MAC control unit 119 and has an instructed data amount, to the transmission HARQ processing unit 105. The transmission data storage unit 103 outputs information on a data amount of accumulated pieces of data to the MAC control unit 119.

The transmission HARQ processing unit 105 codes input data and performs puncturing processing on coded data. The transmission HARQ processing unit 105 outputs punctured data to the transmission processing unit 107, and holds coded data. The transmission HARQ processing unit 105 performs puncturing processing different from puncturing which was performed the previous time based on coded data which is held, in a case where retransmission of data is instructed from the MAC control unit 119. The transmission HARQ processing unit 105 outputs punctured data to the transmission processing unit 107.

The transmission processing unit 107 modulates and codes data input from the transmission HARQ processing unit 105. The transmission processing unit 107 performs DFT (discrete Fourier transform)- IFFT (Inverse Fast Fourier Transform) processing on the modulated and coded data. The transmission processing unit 107 inserts a CP (cyclic prefix) into the data after the DFT-IFET processing, maps the data after CP insertion onto the physical uplink shared channel (PUSCH) of each component carrier (cell) of the uplink, and outputs a result of mapping to the radio unit 109.

The transmission processing unit 107 generates an ACK or a NACK signal, maps the generated signal onto the physical uplink control channel (PUCCH), and outputs a result of mapping to the radio unit 109 in a case where a response instruction of reception data is received from the PHY control unit 117. The transmission processing unit 107 generates a signal, maps the generated signal onto each component carrier (cell) of the uplink, and outputs a result of mapping to the radio unit 109 in a case where a transmission instruction of a scheduling request is received from the PHY control unit 117. The transmission processing unit 107 generates a random access preamble, maps the generated random access preamble onto the physical random access channel (PRACH), and outputs a result of mapping to the radio unit 109 in a case where a transmission instruction of the random access preamble is received from the PHY control unit 117.

The radio unit 109 upconverts data input from the transmission processing unit 107 into a radio frequency of transmission location information (transmission cell information) which is instructed from the PHY control unit 117, adjusts transmission power, and thus transmits data from a transmit antenna. The radio unit 109 downconverts a radio signal received by a receive antenna, and output the downconverted radio signal to the reception processing unit 111.

The reception processing unit 111 performs FFT (fast Fourier transform) processing, decoding, demodulation processing, and the like on a signal input from the radio unit 109. The reception processing unit 111 outputs data of the physical downlink shared channel (PDSCH) in the demodulated data to the reception HARQ processing unit 113. The reception processing unit 111 outputs response information (ACK/NACK) and uplink transmission grant information (Uplink grant) of uplink transmission data of control data which is acquired from the physical downlink control channel PDCCH in the demodulated data, to the MAC control unit 119. The uplink transmission grant information includes data modulation·coding techniques, data size information, HARQ information, transmission location information, and the like.

The reception HARQ processing unit 113 outputs data to the MAC information extraction unit 115 in a case where decoding processing is performed on input data from the reception processing unit 111, and the decoding processing succeeds. The reception HARQ processing unit 113 holds data which fails in the decoding processing, in a case where the decoding processing on the input data fails. The reception HARQ processing unit 113 combines data which has been held and retransmission data in a case of receiving the retransmission data, and performs decoding processing on a result of combination. The reception HARQ processing unit 113 notifies the MAC control unit 119 of which the decoding processing on the input data succeeds or fails.

The MAC information extraction unit 115 extracts control data of the MAC layer (Medium Access Control layer) from data input from the reception HARQ processing unit 113, and outputs the extracted control information to the MAC control unit 119. The MAC information extraction unit 115 outputs remaining data to the data processing unit 121. The data processing unit 121 has functions as the PDCP layer and the RLC layer and performs a decompression function of a compressed IP header, a decoding function of encrypted data, and processing such as segmentation and association of data. Then, the data processing unit 121 recovers data so as to have the original form. The data processing unit 121 distinguishes the RRC message and the user data. The data processing unit 121 outputs the RRC message to the RRC control unit 123 and outputs the user data to the higher layer.

The PHY control unit 117 controls the transmission processing unit 107, the radio unit 109, and the reception processing unit 111 by an instruction from the MAC control unit 119. The PHY control unit 117 notifies the transmission processing unit 107 of the modulation·coding techniques in notification from the MAC control unit 119, transmission power information, and modulation·coding techniques and a transmission location which are obtained from the transmission location information (transmission cell information). The PHY control unit 117 notifies the radio unit 109 of frequency information of a transmission cell and the transmission power information.

The MAC control unit 119 determines a data transmission destination and a priority order of data transmission based on a data transmission control configuration set from the RRC control unit 123, data amount information acquired from the transmission data storage unit 103, and uplink transmission grant information acquired from the reception processing unit 111. The MAC control unit 119 notifies the transmission data storage unit 103 of information regarding data to be transmitted. The MAC control unit 119 notifies the transmission HARQ processing unit 105 of HARQ information and outputs modulation·coding techniques and transmission location information (transmission cell information) to the PHY control unit 117.

The MAC control unit 119 determines whether to transmit the scheduling request based on data amount information acquired from the transmission data storage unit 103. In a case where transmission of the scheduling request is determined, the MAC control unit 119 instructs the PHY control unit 117 to transmit the scheduling request. The MAC control unit 119 creates a buffer status report and outputs the created buffer status report to the transmission data storage unit 103 in a case where uplink transmission grant information corresponding to the scheduling request is acquired.

The MAC control unit 119 counts the number of transmission of the scheduling request. In a case where the uplink transmission grant information is not received even though the number of transmission of the scheduling request reaches the maximum number of transmission, the MAC control unit 119 instructs the PHY control unit 117 to transmit the random access preamble. The MAC control unit 119 notifies the RRC control unit 123 to release of uplink radio resources which are allocated to the mobile station device itself.

The MAC control unit 119 counts the number of transmission of the random access preamble. In a case where the uplink transmission grant information is not obtained and the random access procedure is not ended even though the number of transmission of the random access preamble reaches the maximum number of transmission, the MAC control unit 119 determines a random access problem to occur. The MAC control unit 119 notifies the RRC control unit 123 of occurrence of the random access problem in a case where a cell in which the random access problem occurs is the macro cell (primary cell).

The MAC control unit 119 instructs the PHY control unit 117 to transmit the scheduling request in the macro cell, in a case where a cell in which the random access problem occurs is the small cell (secondary cell). Thus, the MAC control unit 119 creates a buffer status report of data which is to be transmitted in the small cell and outputs the created buffer status report to the transmission data storage unit 103, in a case where uplink transmission grant information corresponding to the scheduling request in the macro cell is acquired.

The MAC control unit 119 acquires response information to uplink transmission data from the reception processing unit 111. The MAC control unit 119 instructs the transmission HARQ processing unit 105 and the PHY control unit 117 of retransmission in a case where the response information indicates NACK (negative response). The MAC control unit 119 instructs the PHY control unit 117 to transmit an ACK signal or a NACK signal in a case where information of success or failure in decoding processing of data is acquired from the reception HARQ processing unit 113.

The MAC control unit 119 has a function of the MAC layer. The MAC control unit 119 controls the radio unit 109 so as to control activation/deactivation control and DRX control and controls the PHY control unit 117 so as to control the transmission processing unit 107 and the reception processing unit 111 in a case where activation/deactivation instruction information and discontinuous reception (DRX) control information of a cell (or a component carrier) are acquired from MAC control information input from the MAC information extraction unit 115.

The MAC control unit 119 outputs transmission timing information in the MAC control information input from the MAC information extraction unit 115 to the PHY control unit 117. The MAC control unit 119 manages the uplink transmission timing and controls the PHY control unit 117.

The RRC control unit 123 sets various configurations for communicating with the base station device 3-1 and the base station device 3-2, such as connection-disconnection processing with the base station device 3-1, a configuration of carrier aggregation, and data transmission control configuration of the control data and the user data. The RRC control unit 123 exchanges information with the higher layer in accordance with the various configurations and controls a lower layer in accordance with the various configurations. The RRC control unit 123 manages the radio resources for each cell, which are allocated by the base station device 3-1.

The RRC control unit 123 creates the RRC message and outputs the created RRC message to the data generation unit 101. The RRC control unit 123 analyzes the RRC message input from the data processing unit 121. The RRC control unit 123 outputs information necessary for the MAC layer to the MAC control unit 119 and outputs information necessary for the physical layer to the PHY control unit 117.

The RRC control unit 123 releases the radio resources of the uplink such as the physical uplink control channel PUCCH and the uplink reference signal, which are allocated to a cell being a target, in a case where notification of release of the uplink radio resource is received from the MAC layer. The RRC control unit 123 determines a radio link failure and performs reconnection processing in a case where notification of the random access problem is received from the MAC layer.

The transmission processing unit 107, the radio unit 109, the reception processing unit 111, and the PHY control unit 117 operate the physical layer. The transmission data storage unit 103, the transmission HARQ processing unit 105, the reception HARQ processing unit 113, the MAC information extraction unit 115, and the MAC control unit 119 operate the MAC layer. The data generation unit 101 and the data processing unit 121 operate the RLC layer and the PDCP layer. The RRC control unit 123 operates the RRC layer.

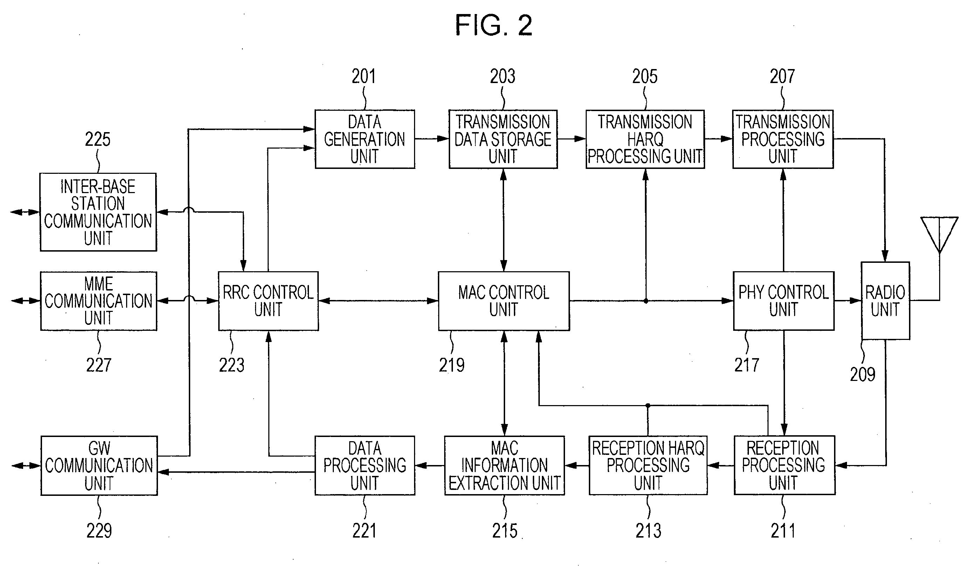

Fig. 2 is a diagram illustrating a structure of the base station device according to the embodiment of the present invention. A data generation unit 201, a transmission data storage unit 203, a transmission HARQ processing unit 205, a transmission processing unit 207, a radio unit 209, a reception processing unit 211, a reception HARQ processing unit 213, a MAC information extraction unit 215, a PHY control unit 217, a MAC control unit 219, a data processing unit 221, an RRC control unit 223, an inter-base station communication unit 225, an MME communication unit 227, and a GW communication unit 229 constitute the base station device 3-1 or the base station device 3-2.

User data from the GW communication unit 229 and control data from the RRC control 223 are input to the data generation unit 201. The data generation unit 201 has functions as the PDCP layer and the RLC layer. The data generation unit 201 performs processing such as header compression of an IP packet of the user data, encryption of data, and segmentation and association of data. The data generation unit 201 adjusts a data size. The data generation unit 201 outputs data subjected to processing and logical channel information of the data to the transmission data storage unit 203.

The transmission data storage unit 203 accumulates pieces of data input from the data generation unit 201 for each user, and output data of a user which is instructed based on an instruction from the MAC control unit 219 and has an instructed data amount, to the transmission HARQ processing unit 205. The transmission data storage unit 203 outputs information on a data amount of accumulated pieces of data to the MAC control unit 219.

The transmission HARQ processing unit 205 codes input data and performs puncturing processing on coded data. The transmission HARQ processing unit 205 outputs punctured data to the transmission processing unit 207, and holds the coded data. The transmission HARQ processing unit 205 performs puncturing processing different from puncturing which was performed the previous time based on coded data which has been held, in a case where retransmission of data is instructed from the MAC control unit 219. The transmission HARQ processing unit 205 outputs punctured data to the transmission processing unit 207.

The transmission processing unit 207 modulates and codes data input from the transmission HARQ processing unit 205. The transmission processing unit 207 maps modulated·coded data onto signals of the physical downlink control channel PDCCH, the downlink synchronization signal, the physical broadcast channel PBCH, the physical downlink shared channel PDSCH, and the like in each cell, and each channel. The transmission processing unit 207 performs OFDM signal processing such as serial/parallel conversion, IFFT (inverse fast Fourier transform), and CP insertion, on the mapped data, and thus generates an OFDM signal.

The transmission processing unit 207 outputs the generated OFDM signal to the radio unit 209. The transmission processing unit 207 generates an ACK signal or a NACK signal, maps the generated signal onto the physical downlink control channel PDCCH, and outputs a result of mapping to the radio unit 209 in a case where a response instruction of reception data is received from the MAC control unit 219. The transmission processing unit 207 maps the uplink transmission grant information which is notified from the PHY control unit 217 onto the physical downlink control channel PDCCH, and outputs a result of mapping to the radio unit 209.

The radio unit 209 upconverts data input from the transmission processing unit 207 into a radio frequency, adjusts transmission power, and thus transmits data from a transmit antenna. The radio unit 209 downconverts a radio signal received by a receive antenna, and output the downconverted radio signal to the reception processing unit 211. The reception processing unit 211 performs FFT (Fast Fourier Transform) processing, decoding, demodulation processing, and the like on a signal input from the radio unit 209.

The reception processing unit 211 outputs data of the physical uplink shared channel (PUSCH) in the demodulated data to the reception HARQ processing unit 213. The reception processing unit 211 outputs response information (ACK/NACK), downlink radio quality information (CQI), and uplink transmission request information (scheduling request) of downlink transmission data of control data acquired from the physical uplink control channel PUCCH in the demodulated data, to the MAC control unit 219.

The reception HARQ processing unit 213 outputs data to the MAC information extraction unit 215 in a case where decoding processing is performed on input data from the reception processing unit 211, and the decoding processing succeeds. The reception HARQ processing unit 213 holds data which fails in the decoding processing, in a case where the decoding processing on the input data fails. The reception HARQ processing unit 213 combines data which has been held and retransmission data in a case of receiving the retransmission data, and performs decoding processing on a result of combination. The reception HARQ processing unit 213 notifies the MAC control unit 219 of which the decoding processing on the input data succeeds or fails.

The MAC information extraction unit 215 extracts control data of the MAC layer from data input from the reception HARQ processing unit 213, and outputs the extracted control information to the MAC control unit 219. The MAC information extraction unit 215 outputs remaining data to the data processing unit 221. The control data of the MAC layer includes a buffer status report and the like. The data processing unit 221 has functions as the PDCP layer and the RLC layer, and performs a decompression function of a compressed IP header, a decoding function of encrypted data, and processing such as segmentation and association of data. Thus, the data processing unit 221 recovers data so as to have the original form. The data processing unit 221 distinguishes the RRC message and the user data. The data processing unit 221 outputs the RRC message to the RRC control unit 223 and outputs the user data to the higher layer.

The PHY control unit 217 controls the transmission processing unit 207, the radio unit 209, and the reception processing unit 211 in accordance with an instruction from the MAC control unit 219. The PHY control unit 217 creates uplink transmission grant information based on a scheduling result of the uplink notified from the MAC control unit 219, and notifies the transmission processing unit 207 of the created uplink transmission grant information.

The MAC control unit 219 has a function of the MAC layer, and controls the MAC layer based on information acquired from the RRC control unit 223, the lower layer, or the like. The MAC control unit 219 performs scheduling processing of data transmitted in the downlink and the uplink. The MAC control unit 219 performs scheduling processing for downlink data based on the response information (ACK/NACK) and the downlink radio channel quality indicator (CQI) of downlink transmission data input from the reception processing unit 211, and data amount information of each user acquired from the transmission data storage unit 203. The MAC control unit 219 controls the transmission data storage unit 203, the transmission HARQ processing unit 205, and the transmission processing unit 207 based on a result of the scheduling processing.

The MAC control unit 219 performs scheduling processing for uplink data based on uplink transmission request information (scheduling request) input from the reception processing unit 211 and the buffer status report input from the MAC information extraction unit 215. The MAC control unit 219 notifies the PHY control unit 217 of a result of the scheduling processing. The MAC control unit 219 notifies the RRC control unit 223 that a buffer status report for the small cell is acquired, in a case where a buffer status report for the macro cell received on the physical uplink shared channel PUSCH represents the buffer status report for the small cell.

The MAC control unit 219 acquires response information to uplink transmission data from the reception processing unit 211. The MAC control unit 219 instructs the transmission HARQ processing unit 205 and the transmission processing unit 207 of retransmission in a case where the response information indicates NACK (negative response). The MAC control unit 219 instructs the transmission processing unit 207 of transmission of an ACK signal or a NACK signal in a case where information of success or failure in decoding processing of data is acquired from the reception HARQ processing unit 213.

The MAC control unit 219 performs activation/deactivation processing of a cell (or a component carrier) which is allocated to the mobile station device 1-1, management of the uplink transmission timing, or the like.

The RRC control unit 223 sets various configurations for communicating with the mobile station device 1-1, such as connection·disconnection processing with the mobile station device 1-1, a configuration of carrier aggregation, and a data transmission control configuration indicating that a cell in which the control data and the user data of the mobile station device 1-1 are transmitted and received. The RRC control unit 223 exchanges information with the higher layer in accordance with the various configurations and controls the lower layer in accordance with the various configurations.

The RRC control unit 223 creates various RRC messages and outputs the created RRC message to the data generation unit 201. The RRC control unit 223 analyzes the RRC message input from the data processing unit 221. The RRC control unit 223 outputs information necessary for the MAC layer to the MAC control unit 219 and outputs information necessary for the physical layer to the PHY control unit 217. The RRC control unit 223 notifies the inter-base station communication unit 225 and the MME communication unit 227 of necessary information in a case where handover or dual connect is performed.

The RRC control unit 223 creates a dual connect release request message for the base station device 3-2 of the small cell and outputs the created message to the inter-base station communication unit 225 so as to release the dual connect in a case where notification of acquiring of the buffer status report for the small cell on the physical uplink shared channel PUSCH of the macro cell is received from the MAC control unit 219. The RRC control unit 223 creates a path switch request message and outputs the created message to the MME communication unit 227.

The inter-base station communication unit 225 performs a connection with the other base station device, and transmits a control message between base station devices, which is input from the RRC control unit 223 to the other base station device. The inter-base station communication unit 225 receives the control message between the base station devices from the other base station device and outputs the received control message to the RRC control unit 223. The control message between the base station devices includes a handover request message, a dual connect release request message, a handover request response message, a dual connect release request response message, a status transmission message, a mobile station information release message, and the like.

The MME communication unit 227 performs a connection with the MME, and transmits a control message between the base station device and the MME, which is input from the RRC control unit 223 to the MME. The MME communication unit 227 receives the control message between the base station device and the MME, and outputs the received control message to the RRC control unit 223. The control message between the base station device and the MME includes a path switch request message, a path switch request response message, and the like.

The inter-GW communication unit 229 performs a connection with a GW, receives user data of the mobile station device, which is transferred from the GW, and outputs the received data to the data generation unit 201. The inter-GW communication unit 229 transmits the user data of the mobile station device, which is input from the data processing unit 221, to the GW.

The transmission processing unit 207, the radio unit 209, and the reception processing unit 211 operate the PHY layer. The transmission data storage unit 203, the transmission HARQ processing unit 205, the reception HARQ processing unit 213, the MAC information extraction unit 215, and the MAC control unit 219 operates the MAC layer. The data generation unit 201 and the data processing unit 221 operate the RLC layer and the PDCP layer. The RRC control unit 223 operates the RRC layer.

### [Description of Operation]

A radio communication system as illustrated in Figs. 6 to 14 is assumed. As illustrated in Fig. 6, the base station device 3-1 and a plurality of mobile station devices 1-1, 1-2, and 1-3 communicate with each other. The radio communication system illustrated in Fig. 14 in which the base station device 3-1 of the macro cell and the base station device 3-2 of the small cell communicate with the mobile station device 1-1 through a plurality of cells which perform carrier aggregation in the dual connect is assumed.

It is necessary that the mobile station device 1-1 transmits an uplink transmission request (scheduling request) for acquiring radio resources of the uplink such that the mobile station device 1-1 transmits control data to the base station device 3-1 of the macro cell and transmits user data to the base station device 3-2 of the small cell.

However, in a case where the physical uplink control channel PUCCH for transmitting a scheduling request is allocated to the mobile station device 1-1 only for the macro cell, and the mobile station device 1-1 transmits a scheduling request for transmitting user data for the small cell on the physical uplink control channel PUCCH of the macro cell, since communication between the base station device 3-1 of the macro cell and the base station device 3-2 of the small cell is delayed, it is impossible to cause the base station device 3-2 of the small cell to straightly perform scheduling of the uplink for the mobile station device 1-1. Thus, the base station device 3-1 of the macro cell also allocates the physical uplink control channel PUCCH for transmitting the scheduling request to the mobile station device 1-1 in the small cell in addition to the macro cell such that delay of scheduling is prevented.

The mobile station device 1-1 transmits the scheduling request to the base station device 3-1 of the macro cell by using the allocated physical uplink control channel PUCCH of the macro cell, in a case where data to be transmitted to the base station device 3-1 of the macro cell is in a transmission buffer, and the uplink radio resources for the macro cell are not allocated. The mobile station device 1-1 transmits the scheduling request to the base station device 3-2 of the small cell by using the allocated physical uplink control channel PUCCH of the small cell, in a case where data to be transmitted to the base station device 3-2 of the small cell is in the transmission buffer and the uplink radio resources for the small cell are not allocated.

If the scheduling request is received from the mobile station device 1-1, each of the base station devices allocates the uplink radio resources for transmitting the buffer status report to the mobile station device 1-1. The mobile station device 1-1 transmits the buffer status report to each of the base station device by using the radio resources of the uplink which are allocated by each of the base station devices.

The mobile station device 1-1 releases the allocated physical uplink control channel PUCCH of the macro cell and the allocated radio resource of the uplink reference signal and performs the random access procedure for the scheduling request in a case where the radio resources of the uplink are not allocated by the base station device 3-1 of the macro cell even though the scheduling request is transmitted to the base station device 3-1 of the macro cell the maximum number of transmission times by using the allocated physical uplink control channel PUCCH of the macro cell.

In a case where performing of the random access procedure causes the base station device 3-1 of the macro cell to allocate the radio resources of the uplink, the mobile station device 1-1 transmits a buffer status report in response to transmission, to the base station device 3-1 to the base station device 3-1 of the macro cell by using the radio resources of the uplink which are allocated by the base station device 3-1 of the macro cell. In a case where the random access procedure is not ended and the radio resources of the uplink is not allocated by the base station device 3-1 of the macro cell even though the random access procedure is performed and the number of transmission of the random access preamble reaches the maximum number of transmission, the mobile station device 1-1 detects a random access problem, determines a radio link failure, and performs the reconnection processing.

The mobile station device 1-1 releases the physical uplink control channel PUCCH, and the radio resources of the uplink reference signal which are allocated to the small cell, and performs the random access procedure for the scheduling request in a case where the radio resources of the uplink are not allocated by the base station device 3-2 of the small cell even though the scheduling request is transmitted to the base station device 3-2 of the small cell the maximum number of transmission times by using the physical uplink control channel PUCCH which is allocated to the small cell.

In a case where performing of the random access procedure causes the radio resources of the uplink to be allocated by the base station device 3-2 of the small cell, the mobile station device 1-1 transmits a buffer status report in response to transmission to the base station device 3-2, to the base station device 3-2 of the small cell by using the radio resources of the uplink which are allocated by the base station device 3-2 of the small cell.

In a case where the random access procedure is not ended and the radio resources of the uplink are not allocated by the base station device 3-2 of the small cell even though the random access procedure is performed and the number of transmission of the random access preamble reaches the maximum number of transmission, the mobile station device 1-1 determines the random access procedure to not succeed.

The mobile station device 1-1 performs the scheduling request in the macro cell. That is, the mobile station device 1-1 transmits the scheduling request to the base station device 3-1 of the macro cell on the physical uplink control channel PUCCH or through the random access procedure. In a case where the scheduling request transmitted to the base station device 3-1 of the macro cell causes the radio resources of the uplink to be allocated, the mobile station device 1-1 transmits the buffer status report in response to transmission to the base station device 3-2 to the base station device 3-1 of the macro cell.

If the base station device 3-1 of the macro cell determines the acquired buffer status report to be a buffer status report for the base station device 3-2 of the small cell, the base station device 3-1 of the macro cell determines a problem to occur in the radio link of the uplink between the base station device 3-2 of the small cell and the mobile station device 1-1. The base station device 3-1 of the macro cell performs a procedure for releasing the dual connect.

In this manner, the mobile station device 1-1 transmits the buffer status report corresponding to data transmission to the base station device 3-2 of the small cell, to the base station device 3-1 of the macro cell, and thus the base station device 3-1 of the macro cell detects a problem in the radio link of the base station device 3-2 of the small cell and does not prevent user data transmission of the mobile station device 1-1.

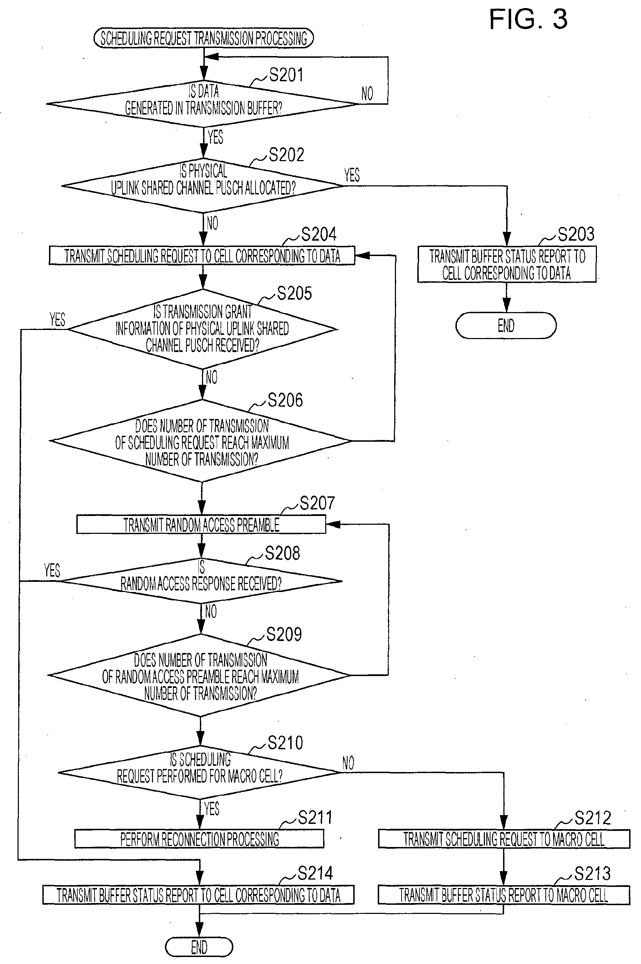

Fig. 3 illustrates an example of a flowchart relating to scheduling request transmission processing of the mobile station device 1-1. A base station device of the macro cell (primary cell) is set as the base station device 3-1 and a base station device of the small cell (secondary cell) is set as the base station device 3-2. The mobile station device 1-1 transmits control data from the macro cell cell, and transmits user data from the small cell cell. The control data described herein refers to a control message of the RRC layer.

The mobile station device 1-1 confirms whether or not new data to be transmitted to the transmission buffer is generated (Step S201). In a case where data to be transmitted is not generated, the mobile station device 1-1 causes the process to return to Step S201 and waits for generating of the data to be transmitted. In a case where the data to be transmitted is generated, the mobile station device 1-1 confirm whether or not the physical uplink shared channel PUSCH for transmitting a buffer status report (BSR) indicating a status of the transmission buffer is allocated (Step S202).

In a case where the physical uplink shared channel PUSCH is allocated, the mobile station device 1-1 transmits the buffer status report to the base station device 3-1 or the base station device 3-2 by using the allocated physical uplink shared channel PUSCH (Step S203). In a case where the physical uplink shared channel PUSCH is not allocated, the mobile station device 1-1 transmits a scheduling request on the physical uplink control channel PUCCH of a cell corresponding to the generated transmission data (Step S204).

That is, in a case where there is data to be transmitted to the base station device 3-1, the mobile station device 1-1 transmits the buffer status report on the physical uplink shared channel PUSCH of the uplink of the cell of the base station device 3-1 or transmits the scheduling request on the physical uplink control channel PUCCH of the uplink of the cell of the base station device 3-1. In a case where there is data to be transmitted to the base station device 3-2, the mobile station device 1-1 transmits the buffer status report on the physical uplink shared channel PUSCH of the cell of the uplink of the base station device 3-2 or transmits the scheduling request on the physical uplink control channel PUCCH of the cell of the uplink of the base station device 3-2.

After transmission of the scheduling request, the mobile station device 1-1 monitors the physical downlink control channel PDCCH of the cell of the downlink corresponding to the cell of the uplink in which the scheduling request is transmitted, during a predetermined period of time, and confirms whether or not transmission grant information (Uplink grant) of the physical uplink shared channel PUSCH is received (Step S205). In a case where the transmission grant information of the physical uplink shared channel PUSCH is received, the mobile station device 1-1 transmits the corresponding buffer status report to the base station device 3-1 or the base station device 3-2 by using the allocated physical uplink shared channel PUSCH (Step S214).

In a case where the transmission grant information of the physical uplink shared channel PUSCH is not received during the predetermined period of time, the mobile station device 1-1 confirms whether or not the number of transmission of the scheduling request reaches the maximum number of transmission (Step S206). In a case where the number of transmission of the scheduling request does not reach the maximum number of transmission of the scheduling request, the process returns to Step S204. Then, the mobile station device 1-1 transmits the scheduling request again.

In a case where the transmission grant information of the physical uplink shared channel PUSCH is not received even though the number of transmission of the scheduling request reaches the maximum number of transmission, the mobile station device 1-1 releases the allocated uplink radio resources such as the physical uplink control channel PUCCH and the uplink reference signal, and performs the scheduling request through the random access procedure. The mobile station device 1-1 transmits a random access preamble to the physical random access channel PRACH (Step S207).

After transmission of the random access preamble, the mobile station device 1-1 monitors the physical downlink control channel PDCCH of the cell of the downlink corresponding to the cell of the uplink in which the random access preamble is transmitted, during a predetermined period of time, and confirms whether or not the random access response is received (Step S208). In a case where the random access response is received, the mobile station device 1-1 transmits the buffer status report to the base station device 3-1 or the base station device 3-2 by using the physical uplink shared channel PUSCH indicated by the random access response (Step S214).

In a case where the random access response is not received during the predetermined period of time, the mobile station device 1-1 confirms whether the number of transmission of the random access preamble reaches the maximum number of transmission of the random access preamble (Step S209). In a case where the number of transmission of the random access preamble does not reach the maximum number of transmission of the random access preamble, the process returns to Step S207. Then, the mobile station device 1-1 transmits the random access preamble again.

In a case where the number of transmission of the random access preamble reaches the maximum number of transmission of the random access preamble, the mobile station device 1-1 confirms whether the cell from which the random access preamble is transmitted is the macro cell or the small cell (Step S210). In a case of the macro cell, the mobile station device 1-1 detects the random access problem based on reaching of the maximum number of transmission of the random access preamble, determines occurrence of a radio link failure, and performs the reconnection processing (Step S211).

In a case of the small cell, the mobile station device 1-1 determines the random access procedure to not succeed based on reaching of the maximum number of transmission of the random access preamble. The mobile station device 1-1 stops user data transmission from the small cell, changes user data transmission control in the small cell to user data transmission control in the macro cell, and transmits the scheduling request to the base station device 3-1 of the macro cell (Step S212).

After transmission of the scheduling request to the base station device 3-1 of the macro cell, the mobile station device 1-1 performs similar processes to Steps S104 to S111 from transmission of the scheduling request until allocation information of the physical uplink shared channel PUSCH is acquired. In a case where the transmission grant information of the physical uplink shared channel PUSCH is acquired, the mobile station device 1-1 transmits a buffer status report relating user data which is planned to be transmitted to the base station device 3-2 of the small cell, to the base station device 3-1 of the macro cell (Step S213).

The mobile station device 1-1 may detect a random access problem in the small cell based on reaching of the maximum number of transmission of the random access preamble and determine occurrence of a radio link failure. The mobile station device 1-1 may change to user data transmission control in the macro cell and transmit the scheduling request to the base station device 3-1 of the macro cell.

The mobile station device 1-1 may determine occurrence of a radio link failure in the uplink and transmit the scheduling request to the base station device 3-1 of the macro cell in a case where the scheduling request using the physical uplink control channel PUCCH reaches the maximum number of transmission of the scheduling request.

In the above-described example, an operation example in a case where the mobile station device 1-1 detects a problem of the radio link in the radio link of the uplink during the scheduling request transmission processing is described. However, similarly, notification of a problem of the radio link between the base station device 3-2 of the small cell and the mobile station device 1-1 may be performed by transmitting the buffer status report to the base station device 3-1 of the macro cell, in a case where the mobile station device 1-1 detects a radio link problem in the radio link of the downlink.

That is, the mobile station device 1-1 measures a downlink reference signal in order to measure radio channel quality of the downlink. The mobile station device 1-1 detects occurrence of a radio link problem of the downlink in a case where it is impossible to receive the downlink reference signal, or in a case where reception quality of the downlink reference signal is equal to or less than a certain value. In a case where the radio link problem of the downlink is not solved even though a predetermined period of time elapses after occurrence of the radio link problem of the downlink is detected, the mobile station device 1-1 determines occurrence of a radio link failure of the downlink.

The mobile station device 1-1 determines the radio link failure of the downlink by using the following cells as a target: for example, (1) cell to which the PUCCH is allocated; (2) cell designated by the base station device 3-1; (3) cell used as a reference of an uplink transmission timing; (4) cell to which the PRACH is allocated; and (5) cell having the smallest cell index value in a cell group.

In a case where the radio link failure of the downlink occurs in the macro cell, the mobile station device 1-1 performs the reconnection processing. In a case where the radio link failure of the downlink occurs in the small cell, the mobile station device 1-1 transmits a scheduling request to the base station device 3-1 of the macro cell and subsequently tries to transmit a buffer status report.

The base station device 3-1 receives the buffer status report from the mobile station device 1-1 on the physical uplink shared channel PUSCH of the macro cell. If the base station device 3-1 recognizes that the received buffer status report is a buffer status report to be transmitted to the base station device 3-2 of the small cell, the base station device 3-1 analyzes that a problem occur in the downlink between the base station device 3-2 of the small cell and the mobile station device 1-1.

The mobile station device 1-1 may stop data transmission and reception in the small cell and deactivate the small cell in a case where a problem of the radio link in the uplink or the downlink of the small cell is detected. The mobile station device 1-1 may release the small cell in addition to deactivation of the small cell.

The mobile station device 1-1 may transmit the buffer status report for the small cell to the base station device 3-1 of the macro cell and transmit the downlink radio channel quality indicator (CQI) of the small cell by using the physical uplink control channel PUCCH of the macro cell in the case where a problem of the radio link in the uplink or the downlink of the small cell is detected.

The mobile station device 1-1 may transmit the downlink radio channel quality indicator (CQI) of the small cell by using the physical uplink control channel PUCCH of the macro cell instead of transmitting of the buffer status report for the small cell to the base station device 3-1 of the macro cell, in the case where a problem of the radio link in the uplink or the downlink of the small cell is detected. The base station device 3-1 of the macro cell analyzes that a radio link problem occurs in the radio link between the base station device 3-2 of the small cell and the mobile station device 1-1, by receiving the downlink radio channel quality indicator of the small cell.

The base station device 3-1 transmits a message for an instruction of release of the dual connect to the base station device 3-2 of the small cell so as to stop the dual connect. If the base station device 3-2 receives the message for the instruction of release of the dual connect, the base station device 3-2 stops the dual connect and perform processing of recovering the data path of the user data to the base station device 3-1.

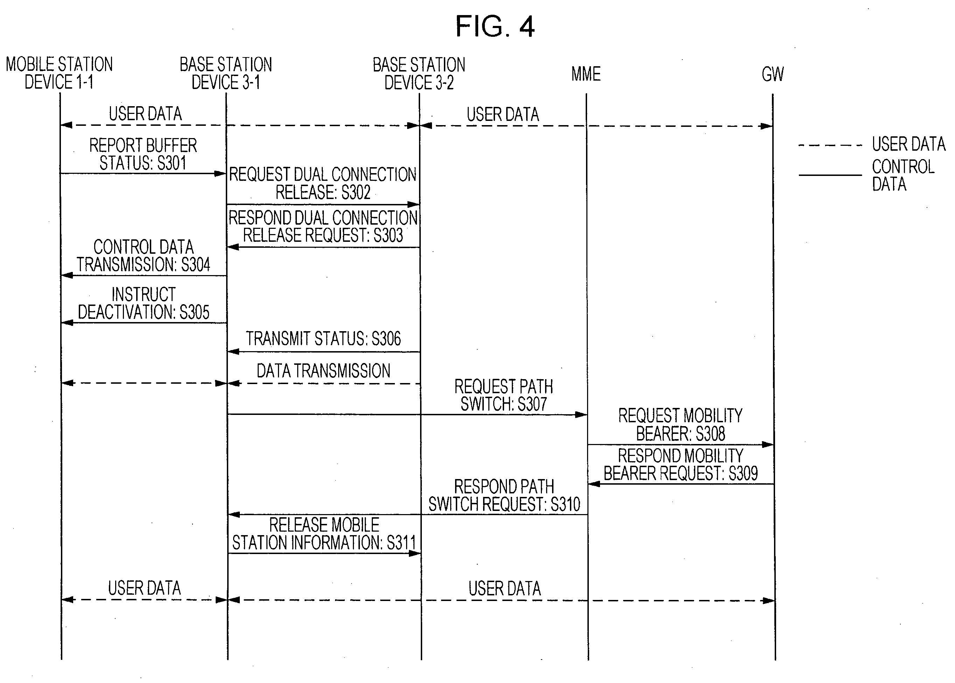

A procedure of releasing the dual connect between the base station device 3-1 of the macro cell and the base station device 3-2 of the small cell will be described below. Fig. 4 is a diagram illustrating an example of a dual connect release procedure according to the embodiment of the present invention.

The mobile station device 1-1 notifies the base station device 3-1 of a buffer status report indicating a buffer status of user data which is to be transmitted to the base station device 3-2 (Step S301). If the base station device 3-1 recognizes that the received buffer status report is a buffer status report of user data for the base station device 3-2, the base station device 3-1 analyzes that a problem occurs in the uplink between the base station device 3-2 of the small cell and the mobile station device 1-1. The base station device 3-1 notifies the base station device 3-2 of the small cell of a dual connect release request message for stopping the dual connect (Step S302).

The dual connect release request message includes at least information (for example, mobile station device identification information C-RNTI) indicating the mobile station device 1-1 which stops the dual connect. The dual connect release request message may include a reason of stopping the dual connect. If the base station device 3-2 of the small cell consents to a stop of the dual connect, the base station device 3-2 of the small cell notifies the base station device 3-1 of the macro cell of a dual connect release request response message (Step S303).

If the base station device 3-1 receives the dual connect release request response message, the base station device 3-1 transmits a data transmission control configuration message for changing user data transmission from the small cell to the macro cell to the mobile station device 1-1 (Step S304). The base station device 3-1 notifies the mobile station device 1-1 of a deactivation instruction message for performing an instruction of deactivation of the small cell (Step S305). After transmission of the deactivation instruction message, the base station device 3-1 may notify the mobile station device 1-1 of a carrier aggregation configuration message indicating deletion of the small cell.

After transmission of the dual connect release request response message, the base station device 3-2 notifies the base station device 3-1 of a status transmission message including user data information of the mobile station device 1-1 (Step S306). Then, the base station device 3-2 transmits user data of the mobile station device 1-1 which is held by the base station device 3-2, to the base station device 3-2.

After reception of the status transmission message, the base station device 3-1 notifies the MME (mobility management entity) of a path switch request message and requests a change of a data path of the user data of the mobile station device 1-1 from the base station device 3-2 to the base station device 3-1 (Step S307).

If the MME receives the path switch request message, the MME notifies the GW (Gateway) of a mobility bearer request message (Step S308). If the GW receives the mobility bearer request message, the GW changes the data path of the user data of the mobile station device 1-1 from the base station device 3-2 to the base station device 3-1. The GW notifies the MME of a mobility bearer request response message (Step S309). The MME notifies the base station device 3-1 of a path switch request response message (Step S310).

The base station device 3-1 may inform the MME that there is a data path change request without handover, by the path switch request message including information which indicates release of a dual connect state with the base station device 3-2. The base station device 3-1 may prepare a new path switch request message and a new path switch request response message for the dual connect.

If the base station device 3-1 receives the path switch request response message, the base station device 3-1 notifies the base station device 3-2 of a mobile station information release message for performing an instruction of releasing of information of the mobile station device 1-1 (Step S311). If the base station device 3-2 receives the mobile station information release message, the base station device 3-2 deletes information of the mobile station device 1-1.

In a case where the data path of the user data is configured between the GW and the base station device 3-1, and the base station device 3-1 transmits the user data to the base station device 3-2, and thus the dual connect is performed, processes of Steps S307, S308, S309, and S310 may not be performed. After transmission of the status transmission message, or after transmission of the status transmission message and then transmission of the user data, the base station device 3-2 may delete information of the mobile station device 1-1 without reception of the mobile station information release message.

In this manner, the base station device 3-1 of the macro cell receives the buffer status report corresponding to data transmission to the base station device 3-2 of the small cell, from the mobile station device 1-1, and thus it is possible to detect a radio link problem between the base station device 3-2 of the small cell and the mobile station device 1-1. The base station device 3-1 of the macro cell rapidly releases the dual connect with the base station device 3-2 of the small cell, and thus it is possible to not prevent user data transmission of the mobile station device 1-1.

In the above-described example, a procedure in which the mobile station device 1-1 transmits a buffer status report which is to be transmitted to the base station device 3-2 of the small cell, to the base station device 3-1 of the macro cell, and thus the base station device 3-1 of the macro cell detects a problem of a radio link between the base station device 3-2 and the mobile station device and notifies the base station device 3-2 of the small cell that the dual connect is released. Meanwhile, a procedure of performing release notification of the dual connect from the base station device 3-2 of the small cell to the base station device 3-1 of the macro cell will be described below.

The base station device 3-2 of the small cell measures reception quality of an uplink reference signal which is transmitted from the mobile station device 1-1 so as to measure radio quality of the uplink. A reception quality measurement result of the uplink reference signal is used in uplink scheduling of the mobile station device 1-1. The base station device 3-2 transmits a message indicating release of the dual connect to the base station device 3-1 of the macro cell so as to stop the dual connect in a case where the base station device 3-2 detects a problem of the radio link, for example, in a case where it is impossible to receive the uplink reference signal or in a case where reception quality of the uplink reference signal is equal to or less than a certain value.

If the base station device 3-1 receives a message for performing an instruction of release of the dual connect, the base station device 3-1 stops the dual connect and performs processing of recovering the data path of the user data to the base station device 3-1.

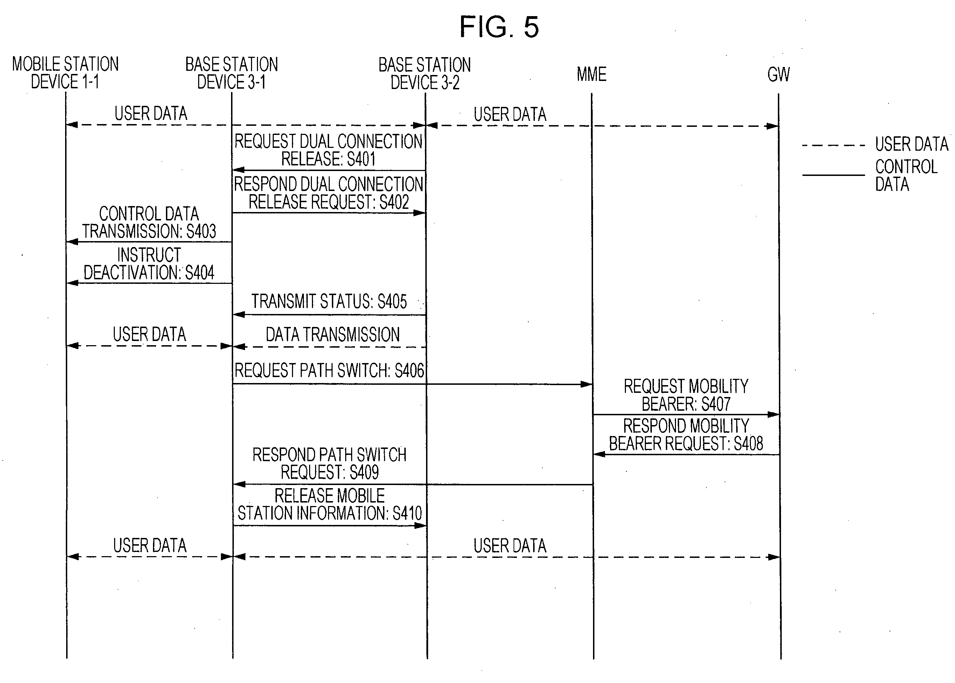

A procedure of releasing of the dual connect between the base station device 3-1 of the macro cell and the base station device 3-2 of the small cell will be described below. Fig. 5 is a diagram illustrating an example of a dual connect release procedure according to the embodiment of the present invention. The following descriptions will be made by using a base station device of the macro cell as the base station device 3-1 and using a base station device of the small cell as the base station device 3-2.

The base station device 3-2 of the small cell measures reception quality of the uplink reference signal transmitted for measuring radio channel quality of the uplink from the mobile station device 1-1. The base station device 3-2 transmits a dual connect release request message for stopping the dual connect to the base station device 3-1 of the macro cell in a case where the base station device 3-2 detects a problem of the radio link, for example, in a case where it is impossible to receive the uplink reference signal or in a case where reception channel quality of the uplink reference signal is equal to or less than a certain value (S401).

The base station device 3-2 of the small cell may determine detection of a problem of the radio link in a case where it is still impossible to receive an uplink reference signal even though a predetermined period of time elapses from when it is impossible to receive the uplink reference signal, or in a case where the reception channel quality of the uplink reference signal is still equal to or less than the certain value even though a predetermined period of time elapses from when the reception channel quality of the uplink reference signal has been equal to or less than a certain value.

The dual connect release request message includes at least information (for example, mobile station device identification information C-RNTI) indicating the mobile station device 1-1 which stops the dual connect. The dual connect release request message may include a reason of stopping the dual connect. If the base station device 3-1 receives the dual connect release request message, the base station device 3-1 stops the dual connect and performs processing of recovering the data path of the user data to the base station device 3-1. If the base station device 3-1 of the macro cell consents to a stop of the dual connect, the base station device 3-1 of the macro cell notifies the base station device 3-2 of the small cell of a dual connect release request response message (Step S402).

After the base station device 3-1 transmits the dual connect release request response message, the base station device 3-1 transmits a data transmission control message of performing an instruction to transmit the user data of the mobile station device 1-1 to the cell of the base station device 3-1, to the mobile station device 1-1 (Step S403).

The base station device 3-1 notifies the mobile station device 1-1 of a deactivation instruction of the small cell (Step S404). After transmission of the deactivation instruction, the base station device 3-1 may notify the mobile station device 1-1 of the carrier aggregation configuration message indicating deletion of the small cell.

After reception of the dual connect release request response message, the base station device 3-2 notifies the base station device 3-1 of a status transmission message including user data information of the mobile station device 1-1 (Step S405). Then, the base station device 3-2 transmits user data of the mobile station device 1-1 which is held by the base station device 3-2, to the base station device 3-2.

After reception of the status transmission message, the base station device 3-1 notifies the MME (mobility management entity) of a path switch request message and requests the change of a data path of the user data of the mobile station device 1-1 from the base station device 3-2 to the base station device 3-1 (Step S406).

If the MME receives the path switch request message, the MME notifies the GW (Gateway) of a mobility bearer request message (Step S407). If the GW receives the mobility bearer request message, the GW changes the data path of the user data of the mobile station device 1-1 from the base station device 3-2 to the base station device 3-1. The GW notifies the MME of a mobility bearer request response message (Step S408). The MME notifies the base station device 3-1 of a path switch request response message (Step S409).

The base station device 3-1 may inform the MME that there is a data path change request without handover, by the path switch request message including information which indicates release of a dual connect state with the base station device 3-2. The base station device 3-1 may prepare a new path switch request message and a new path switch request response message for the dual connect.

If the base station device 3-1 receives the path switch request response message, the base station device 3-1 notifies the base station device 3-2 of a mobile station information release message for performing an instruction of releasing of information of the mobile station device 1-1 (Step S410). If the base station device 3-2 receives the mobile station information release message, the base station device 3-2 deletes information of the mobile station device 1-1.

In a case where the data path of the user data is configured between the GW and the base station device 3-1, and the base station device 3-1 transmits the user data to the base station device 3-2, and thus the dual connect is performed, processes of Steps S406, S407, S408, and S409 may not be performed. After transmission of the status transmission message, or after transmission of the status transmission message and then transmission of the user data, the base station device 3-2 may delete information of the mobile station device 1-1 without reception of the mobile station information release message.

In the above-described example, a method is described in which the mobile station device 1-1 notifies the base station device 3-1 of the macro cell of the buffer status report, and thus causes the base station device 3-1 to recognize occurrence of a problem in a radio link and data transmission and reception between the base station device 3-2 of the small cell and the mobile station device 1-1 is not delayed in a case where the mobile station device 1-1 detects occurrence of the problem in the radio link between the base station device 3-2 of the small cell and the mobile station device 1-1. However, the above-descriptions are similarly applied to a case where a problem occurs in a radio link between the base station device 3-2 of the macro cell and the mobile station device 1-1.

That is, in a case where the mobile station device 1-1 detects occurrence of a problem in the radio link between the base station device 3-1 of the macro cell and the mobile station device 1-1, the mobile station device 1-1 notifies the base station device 3-2 of the small cell of the buffer status report, and thus causes the base station device 3-2 of the small cell to recognize occurrence of the problem in the radio link.

Thus, the base station device 3-2 of the small cell causes processing of transitioning a function as the primary cell (PCell) to the small cell to be performed between base station devices of the macro cell in a case where occurrence of a problem in a radio link between the base station device 3-1 of the macro cell and the mobile station device 1-1 is recognized. In this manner, it is possible to cause the reconnection processing to not be performed as much as possible. This advantage may be applied to a case where the base station device 3-1 of the macro cell detects occurrence of the problem in the radio link between the base station device 3-1 of the macro cell and the mobile station device 1-1.

Hitherto, the embodiment of the invention is described in detail with reference to the drawings. However, a specific structure is not limited to the above descriptions and various design changes and the like may be made in a range without departing from a gist of the invention.

In this embodiment, the mobile station device is described as a terminal device or a communication device. However, this application invention is not limited thereto and may be applied to a terminal device or a communication device such as an installation type electronic device which is installed in the outside or the inside of a building, or a non-movable type electronic device, for example, an AV device, a kitchen appliance, a cleaning-washing device, an air conditioner, a vending machine, other household appliances.

For convenience of the descriptions, the mobile station device 1-1, the base station device 3-1, and the base station device 3-2 according to the embodiment are described using functional block diagrams. However, a program for implementing functions of each component of the mobile station device 1-1, the base station device 3-1, and the base station device 3-2 or some of the functions may be recorded in a computer readable recording medium and the program recorded in the recording medium may be read and executed by a computer system. Thus, the mobile station device or the base station device may be controlled. The "computer system" referred herein includes an OS or hardware such as a peripheral device.

The "computer readable recording medium" refers to a portable medium such as a flexible disk, a magneto-optical disk, a ROM, and a CD-ROM, and a storage device such as a hard disk, which is mounted in the computer system. The "computer readable recording medium" includes a medium which dynamically holds a program for a short period of time, like a communication line in a case where the program is transmitted through the communication line such as a network (for example, the Internet) and a telecommunication line, and a medium which holds the program for a constant period of time, like a volatile memory in a computer system which is a server or a client in that case. The above program may be used for implementing some of the above-described functions. The above-described functions may be combined with a program which is already recorded in the computer system, and thus a result of combination may be implemented.

Each of functional blocks used in the above embodiment may be realized as an LSI which is a typical integrated circuit. Each of the functional blocks may be individually chipped. Some or all of the functional blocks may be integrated and chipped. A method of manufacturing an integrated circuit is not limited to an LSI and may be realized by using dedicated circuits or general processors. If a technology of manufacturing an integrated circuit, which is substituted with the LSI appears by progress of a semiconductor technology, an integrated circuit may be used by using this technology.

Hitherto, the embodiment of this invention is described in detail with reference to the drawings. However, a specific structure is not limited to this embodiment and designs in a range without departing from a gist of the invention are included in a scope of claims.

### Industrial Applicability

An aspect of the present invention may be applied to a radio communication system, a base station device, a terminal device, a radio communication method, an integrated circuit, and the like in which efficient switching of data transmission and reception control is required.

### Reference Signs List

- 1-1 to 1-3: MOBILE STATION DEVICE
- 3-1, 3-2: BASE STATION DEVICE
- 101, 201: DATA GENERATION UNIT
- 103, 203: TRANSMISSION DATA STORAGE UNIT
- 105, 205: TRANSMISSION HARQ PROCESSING UNIT
- 107, 207: TRANSMISSION PROCESSING UNIT
- 109, 209: RADIO UNIT
- 111, 211: RECEPTION PROCESSING UNIT
- 113, 213: RECEPTION HARQ PROCESSING UNIT
- 115, 215: MAC INFORMATION EXTRACTION UNIT
- 117, 217: PHY CONTROL UNIT
- 119, 219: MAC CONTROL UNIT
- 121, 221: DATA PROCESSING UNIT
- 123, 223: RRC CONTROL UNIT
- 225: INTER-BASE STATION COMMUNICATION UNIT
- 227: MME COMMUNICATION UNIT
- 229: GW COMMUNICATION UNIT

## Claims

1. A radio communication system in which a first base station device and a second base station device communicate with a terminal device, wherein
the terminal device transmits, to the first base station device and the second base station device, report information corresponding to data transmission of each of the base station devices, and
the terminal device transmits, to the first base station device, report information corresponding to data transmission of the second base station device, in a case where occurrence of a problem is detected in a radio link between the second base station device and the terminal device.

2. The radio communication system according to Claim 1, wherein
the terminal device determines that occurrence of a problem in the radio link of the second base station device is detected in a case where a response corresponding to a scheduling request is not obtained from the second base station device even though the scheduling request is transmitted to the second base station device a predetermined number of times.

3. The radio communication system according to Claim 1, wherein
the report information is a buffer status report of uplink data.

4. The radio communication system according to Claim 1, wherein
the report information is downlink radio channel quality information.

5. The radio communication system according to Claim 1, wherein
the first base station device notifies the second base station device of a connection release request, in a case where the report information corresponding to the second base station device is received from the terminal device.

6. A base station device that is connected to other base station device and communicates with a terminal device, wherein
the base station device receives report information corresponding to data transmission of its own base station device from the terminal device, and
the base station device detects occurrence of a problem in a radio link between the other base station device and the terminal device, in a case where report information corresponding to data transmission of the other base station device is received from the terminal device.

7. The base station device according to Claim 6, wherein
the base station device notifies the other base station device of a connection release request in a case where occurrence of the problem in the radio link between the other base station device and the terminal device is detected.

8. A terminal device that communicates with a first base station device and a second base station device, wherein
the terminal device transmits, to the first base station device and the second base station device, report information corresponding to data transmission of each of the base station devices, and
the terminal device transmits, to the first base station device, the report information corresponding to data transmission of the second base station device, in a case where occurrence of a problem in a radio link between the second base station device and the terminal device is detected.

9. The terminal device according to Claim 8, wherein
the terminal device determines that occurrence of the problem in the radio link of the second base station device is detected, in a case where a response to a scheduling request is not obtained from the second base station device even though the scheduling request is transmitted to the second base station device a predetermined number of times.

10. A radio communication method of a base station device that is connected to other base station device and communicates with a terminal device, the method comprising:
a step of receiving, from the terminal device, report information corresponding to data transmission of its own base station device;
a step of detecting occurrence of a problem in a radio link between the other base station device and the terminal device, in a case where report information corresponding to data transmission of the other base station device is received from the terminal device; and
a step of notifying the other base station device of a connection release request in a case where occurrence of the problem in the radio link between the other base station device and the terminal device is detected.

11. A radio communication method of a terminal device that communicates with a first base station device and a second base station device, the method comprising:
a step of transmitting, to the first base station device and the second base station device, report information corresponding to data transmission of each of the base station devices; and
a step of transmitting, to the first base station device, the report information corresponding to data transmission of the second base station device in a case where occurrence of a problem in a radio link between the second base station device and the terminal device is detected.

12. An integrated circuit that is applied to a base station device that is connected to other base station device and communicates with a terminal device, the circuit comprising:
means for receiving, from the terminal device, report information corresponding to data transmission of its own base station device;
means for detecting occurrence of a problem in a radio link between the other base station device and the terminal device, in a case where report information corresponding to data transmission of the other base station device is received from the terminal device; and
means for notifying the other base station device of a connection release request in a case where occurrence of the problem in the radio link between the other base station device and the terminal device is detected.

13. An integrated circuit that is applied to a terminal device which communicates with a first base station device and a second base station device, the circuit comprising:
means for transmitting, to the first base station device and the second base station device, report information corresponding to data transmission of each of the base station devices; and
means for transmitting, to the first base station device, the report information corresponding to data transmission of the second base station device, in a case where occurrence of a problem in a radio link between the second base station device and the terminal device is detected.
